(19) Europäisches Patentamt
European Patent Office
Office européen des brevets

(11) **EP 4 373 006 A1**

(12) **EUROPEAN PATENT APPLICATION**
published in accordance with Art. 153(4) EPC

(43) Date of publication:
**22.05.2024 Bulletin 2024/21**

(21) Application number: **22855483.8**

(22) Date of filing: **10.08.2022**

(51) International Patent Classification (IPC):
**H04B 7/0456** (2017.01)    **H04B 7/06** (2006.01)

(52) Cooperative Patent Classification (CPC):
**H04B 7/0456; H04B 7/06**

(86) International application number:
**PCT/CN2022/111556**

(87) International publication number:
**WO 2023/016503 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.08.2021 CN 202110918240**

(71) Applicant: **Huawei Technologies Co., Ltd.
Shenzhen, Guangdong 518129 (CN)**

(72) Inventors:
• **SUN, Yan
Shenzhen, Guangdong 518129 (CN)**
• **WU, Yiqun
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND APPARATUS**

(57)    This disclosure relates to a communication method and apparatus. An access network device receives characteristic information of a downlink channel from a terminal device, and obtains information about a first codeword based on the characteristic information of the downlink channel and a first model. The first codeword is used for precoding. According to the method provided in this disclosure, a codeword that matches a communication scenario can be obtained, thereby improving communication performance.

FIG. 3

## Description

## CROSS-REFERENCE TO RELATED APPLICATIONS

This application claims priority to Chinese Patent Application No. 202110918240.X, filed with the China National Intellectual Property Administration on August 11, 2021 and entitled "COMMUNICATION METHOD AND APPARATUS", which is incorporated herein by reference in its entirety.

## TECHNICAL FIELD

This disclosure relates to the field of communication technologies, and in particular, to a communication method and apparatus.

## BACKGROUND

Beamforming is a signal preprocessing technology based on an antenna array. In the beamforming technology, a directional beam may be generated by adjusting a weighting coefficient of each array element in an antenna array. A main task of beamforming is to compensate for signal fading and distortion caused by factors such as a space loss and a multipath effect in a radio propagation process, and reduce interference between user equipments on a same channel, so that an obvious array gain can be obtained. Therefore, the beamforming technology has great advantages in expanding a coverage area, increasing an edge throughput, suppressing interference, and the like.

Accuracy of beamforming depends on determining of a codebook, and a corresponding beam may be determined based on a codeword, that is, a precoding matrix, in the codebook. Therefore, how to determine a codebook for beamforming is a problem worth studying.

## SUMMARY

This disclosure provides a communication method and apparatus, so that a beam better matches a communication scenario.

According to a first aspect, a first communication method is provided. The method may be performed on a network device side. The method may be performed by using software, hardware, or a combination of software and hardware. For example, the method is performed by a network device, or is performed by a larger device including a network device, or is performed by a circuit system, where the circuit system can implement a function of a network device, or is performed by a network device or a network element of a network device with the assistance of an AI module independent of the network device. This is not limited. For example, the network device is an access network device, for example, a base station. The method includes: receiving characteristic information of a downlink channel from a terminal device; and obtaining first codeword information based on the characteristic information of the downlink channel and a first model, where input of the first model includes the characteristic information of the downlink channel, output of the first model includes the first codeword information, and a first codeword corresponding to the first codeword information is used for precoding. Alternatively, the method includes: receiving characteristic information of a downlink channel from a terminal device; and generating first codeword information based on the characteristic information of the downlink channel, where a first codeword corresponding to the first codeword information is used to precode downlink data.

In this disclosure, a codeword does not need to be selected from a fixed codebook agreed on in a protocol, that is, a terminal device does not need to store a codebook including one or more fixed precoding matrices, but instead, codeword information may be generated based on characteristic information, fed back by the terminal device, of a downlink channel. The characteristic information, fed back by the terminal device, of the downlink channel accords with a current communication scenario, so that a transmit beam corresponding to the codeword information generated based on the characteristic information can adapt to the current communication scenario. Therefore, in different communication scenarios, codeword information applying to the scenarios can be obtained based on characteristic information, fed back by a terminal device, of a downlink channel. The codeword information corresponds to, for example, a beam. According to the method provided in this disclosure, a beam that matches a communication scenario can be obtained, thereby improving communication performance. In addition, in this disclosure, a plurality of beam scanning processes based on a fixed codebook agreed on in a protocol do not need to be performed, so that air interface overheads can be reduced. In addition, the characteristic information, fed back by the terminal device, of the downlink channel can truly express a characteristic of the downlink channel between the network device and the terminal device, so that the beam corresponding to the codeword information obtained based on the characteristic information of the downlink channel can be aligned with a direction of a main path of the downlink channel as much as possible, thereby improving a penetration capability of a signal sent by using the transmit beam, reducing path fading, increasing a propagation distance of the signal, and improving a coverage capability of the signal.

In an optional implementation, the method further includes: precoding first downlink data based on the first codeword, to obtain precoded data; and sending the precoded data to the terminal device. The first codeword is obtained based on the characteristic information, fed back by the terminal device, of the downlink channel, and can reflect a current communication scenario and a real channel condition as much as possible. The first downlink data is precoded based on the first codeword, so that a precoding result can be accurate, thereby improving communication performance.

In an optional implementation, the method further includes: sending K sounding signals to the terminal device based on K sounding signal codewords. One sounding signal codeword is used to send one sounding signal. The network device may send the K sounding signals to the terminal device. After receiving the K sounding signals, the UE may extract the characteristic information of the downlink channel and send the characteristic information of the downlink channel to the network device, so that the network device can obtain the first codeword information.

In an optional implementation, the method further includes: obtaining an $N^{th}$ piece of sounding signal codeword information (or obtaining an $N^{th}$ sounding signal codeword) based on a first operation and a second operation, and determining the $N^{th}$ piece of sounding signal codeword information as the first codeword information (or determining the $N^{th}$ sounding signal codeword as the first codeword). The first operation includes: receiving an $i^{th}$ piece of characteristic information of the downlink channel from the terminal device, and obtaining an $(i+1)^{th}$ piece of sounding signal codeword information (or obtaining an $(i+1)^{th}$ sounding signal codeword) based on the $i^{th}$ piece of characteristic information of the downlink channel. The second operation includes: sending an $(i+1)^{th}$ sounding signal to the terminal device based on the $(i+1)^{th}$ piece of sounding signal codeword information (or based on the $(i+1)^{th}$ sounding signal codeword), and returning to the first operation, i is an integer from 1 to N. Alternatively, the method further includes: obtaining an $N^{th}$ sounding signal codeword based on a first operation and a second operation, and determining the $N^{th}$ sounding signal codeword as the first codeword. The first operation includes: receiving an $i^{th}$ piece of characteristic information of the downlink channel from the terminal device, and obtaining an $(i+1)^{th}$ sounding signal codeword based on the $i^{th}$ piece of characteristic information of the downlink channel. The second operation includes: sending an $(i+1)^{th}$ sounding signal to the terminal device based on the $(i+1)^{th}$ sounding signal codeword, and returning to the first operation, i is an integer from 1 to N. In this implementation, after sending a sounding signal based on a sounding codebook and receiving first characteristic information returned by the UE, the network device does not directly determine, based on the first characteristic information, codeword information used to send data, but continues to send a sounding signal based on codeword information determined based on the first characteristic information. After receiving the sounding signal, the UE continues to extract characteristic information of the downlink channel, and sends the characteristic information of the downlink channel to the network device. After receiving the characteristic information of the downlink channel from the UE, the network device continues to determine codeword information based on the characteristic information of the downlink channel, and sends a sounding signal based on the codeword information; and so on. This is equivalent to an iterative process. A sounding beam corresponding to each piece of sounding signal codeword information newly determined by the network device is determined based on characteristic information, fed back by the UE, of the downlink channel, so that a direction of the sounding beam is likely to include a direction of a main path of the downlink channel or a direction in which energy is concentrated. Therefore, a beamwidth of the sounding beam newly determined by the network device may be narrower than a width of a beam corresponding to each codeword included in the sounding codebook, and directionality is better. If the network device and the UE repeatedly perform the foregoing iterative steps, an optimized sounding beam may become narrower, or a plurality of wave peaks included in a single sounding beam may point to directions of main paths in the downlink channel, so that the optimized sounding beam can better match a transmission characteristic of the downlink channel.

In an optional implementation, a minimum mean square error between a weight of the $N^{th}$ piece of sounding signal codeword information and a weight of an $(N-1)^{th}$ piece of sounding signal codeword information is less than or equal to a first threshold. For example, after N iterations, the network device determines that an obtained $N^{th}$ piece of codeword information is converged, and the iterative process may end. The network device may determine, in a plurality of manners, whether the $N^{th}$ piece of sounding signal codeword information is converged. For example, in a determining manner, the network device determines the minimum mean square error between the weight of the $N^{th}$ piece of sounding signal codeword information and the weight of the $(N-1)^{th}$ piece of sounding signal codeword information. If the minimum mean square error is less than or equal to the first threshold, it indicates that the $N^{th}$ piece of sounding signal codeword information is converged. If the minimum mean square error is greater than the first threshold, it indicates that the $N^{th}$ piece of sounding signal codeword information is not converged. This manner is simple and accurate.

In an optional implementation, before the receiving a first piece of characteristic information of the downlink channel from the terminal device, the method further includes: sending K sounding signals to the terminal device based on K sounding signal codewords. One sounding signal codeword is used to send one sounding signal. The network device may first send the K sounding signals to the terminal device, and after receiving the first characteristic information from the UE, may continue to send a sounding signal to the UE, to start an iterative process. The K sounding signal codewords correspond to, for example, one or more sounding codebooks, and these sounding codebooks are, for example, preconfigured by the network device, or predefined in a protocol.

In an optional implementation, the method further includes: The first model is included in $M_1$ first-type models, $M_1$ is an integer greater than 1, each first-type model corresponds to a respective channel type, the first-type model is used to determine codeword information based on characteristic information of a channel, and a codeword corresponding to the codeword information is used for precoding. In actual communication, there are various communication scenarios, and corresponding channel types may be different. For example, channel types corresponding to communication scenarios such as a square, a subway station, an office, and an alley are different from each other. Therefore, if a trained model better matches an actual communication environment, for example, better matches a channel type, an application effect of the model is better. It may be difficult for one first-type model to apply to all channel types. Therefore, the network device may obtain $M_1$ first-type models through training, and each first-type model corresponds to a respective channel type, so that different channel types have corresponding first-type models, and output information of a first-type model can better match a current channel type.

In an optional implementation, the first model is obtained through training based on a first training dataset, the first training dataset includes one or more downlink channel samples, and the first training dataset corresponds to a first channel type. To enable the first-type models to correspond to channel types, when a first-type model is trained, training may be performed based on a training dataset corresponding to a channel type corresponding to the first-type model, so that a trained first-type model can correspond to the channel type.

In an optional implementation, the method further includes: sending information about a third model to the terminal device. Input of the third model is information about a sounding signal, and output of the third model is characteristic information of a channel. The terminal device may extract the characteristic information of the downlink channel by using a model. The model may be obtained through training by the network device (or another device). The network device may send information about the model to the terminal device.

In an optional implementation, the third model is included in $M_1$ second-type models, $M_1$ is an integer greater than 1, the $M_1$ first-type models are in a one-to-one correspondence with the $M_1$ second-type models, input of the second-type model is information about a sounding signal, and output of the second-type model is characteristic information of a channel. For example, the network device obtains the first-type models and the second-type models through training. The network device may perform joint training on the first-type models and the second-type models, so that the first-type models are in a one-to-one correspondence with the second-type models. For the network device and one terminal device, one corresponding pair of a first-type model and a second-type model (for example, the first model and the third model) may be used.

In an optional implementation, the third model is obtained through training based on the first training dataset, or the third model is obtained through training based on the first training dataset and assistance information of the terminal device, the first training dataset includes the one or more downlink channel samples, and the first training dataset corresponds to the first channel type. To enable the second-type models to correspond to channel types, when a second-type model is trained, training may be performed based on a training dataset corresponding to a channel type corresponding to the second-type model, so that a trained second-type model can correspond to the channel type. In addition, the assistance information of the terminal device may be further considered during training. In this way, the second-type model obtained through training can more accurately extract characteristic information of a downlink channel.

In an optional implementation, the method further includes: The first training dataset is obtained based on a second model, and the second model is used to obtain training data corresponding to the first channel type. Alternatively, the first training dataset is determined in at least one piece of channel estimation information from at least one terminal device based on location information of the at least one terminal device, and the first training dataset includes a part or all of the at least one piece of channel estimation information. Alternatively, the first training dataset is obtained by clustering at least one piece of channel estimation information from at least one terminal device, and the first training dataset includes a part or all of the at least one piece of channel estimation information.

In an optional implementation, the assistance information of the terminal device includes one or more of the following: location information of the terminal device, speed information of the terminal device, acceleration information of the terminal device, posture information of the terminal device, or movement direction information of the terminal device. In addition, the assistance information of the terminal device may further include other information, for example, information such as an image and/or a video output by a photographing apparatus (for example, an image capture apparatus and/or a video capture apparatus) disposed inside the terminal device (or disposed independently from the terminal device but capable of communicating with the terminal device).

In an optional implementation, the assistance information of the terminal device is used to determine information about a path of the downlink channel, and the information about the path of the downlink channel is used to determine a direction and/or a coverage width corresponding to the first codeword information. Based on the assistance information of the terminal device, the information about the path of the downlink channel can be determined. For example, one or more of a quantity of a plurality of paths, directions of the plurality of paths, or an angle change range of a main path of the downlink channel are determined. In this way, characteristic information, extracted by the second-type model, of the downlink channel is more accurate, and is more abundant.

In an optional implementation, the method further includes: receiving capability information from the terminal device. The capability information indicates one or more of the following: whether the terminal device supports a neural network model, a type of a neural network model supported by the terminal device, computing power information of the terminal device, storage capability information of the terminal device, the location information of the terminal device, antenna configuration information of the terminal device, or sensor configuration information of the terminal device. The terminal device may send the capability information to the network device, and the network device may determine, based on the capability information, whether the terminal device uses a neural network model, or determine a complexity degree or a scale of a neural network model applying to the terminal device, or the like. The capability information of the terminal device is not limited thereto, and may further include capability information of the terminal device in another aspect.

In an optional implementation, the computing power information of the terminal device indicates a complexity degree of a neural network that can be supported by the terminal device; the storage capability information of the terminal device indicates a scale of a neural network that can be stored by the terminal device; the location information of the terminal device indicates a type of a downlink channel corresponding to the terminal device; the antenna configuration information of the terminal device is used to determine a neural network corresponding to the terminal device; and/or the sensor configuration information of the terminal device is used to determine a neural network corresponding to the terminal device. The network device can determine, based on the capability information of the terminal device, corresponding information of a neural network model configured for the terminal device, so that the neural network model configured for the terminal device can meet an actual capability of the terminal device.

According to a second aspect, a second communication method is provided. The method may be performed on a terminal device side. The method may be performed by using software, hardware, or a combination of software and hardware. For example, the method is performed by a terminal device, or is performed by a circuit system, or is performed by a larger device including a terminal device. The circuit system can implement a function of a terminal device. This is not limited. The method includes: receiving K sounding signals from an access network device, where K is a positive integer; obtaining first characteristic information based on information about the K sounding signals and a third model, where the first characteristic information is characteristic information of a downlink channel; and sending the first characteristic information to the access network device.

In an optional implementation, the obtaining first characteristic information based on information about the K sounding signals and a third model includes: inputting the information about the K sounding signals into the third model, to obtain the first characteristic information; or inputting the information about the K sounding signals and assistance information of the terminal device into the third model, to obtain the first characteristic information.

In an optional implementation, the assistance information of the terminal device includes one or more of the following: location information of the terminal device, speed information of the terminal device, acceleration information of the terminal device, posture information of the terminal device, or movement direction information of the terminal device.

In an optional implementation, after the sending the first characteristic information to the access network device, the method further includes: cyclically performing the following steps when i is an integer from 1 to N: receiving an $i^{th}$ sounding signal from the access network device; obtaining an $i^{th}$ piece of characteristic information based on information about the $i^{th}$ sounding signal and a fourth model, where the $i^{th}$ piece of characteristic information is characteristic information of the downlink channel; and sending the $i^{th}$ piece of characteristic information to the access network device.

In an optional implementation, the obtaining an $i^{th}$ piece of characteristic information based on information about the $i^{th}$ sounding signal and a fourth model includes: inputting the information about the $i^{th}$ sounding signal into the fourth model, to obtain the $i^{th}$ piece of characteristic information; or inputting the information about the $i^{th}$ sounding signal and the assistance information of the terminal device into the fourth model, to obtain the $i^{th}$ piece of characteristic information.

In an optional implementation, the method further includes: receiving information about the third model from the access network device.

In an optional implementation, the method further includes: sending channel estimation information to the access network device. The channel estimation information is used to train the third model.

In an optional implementation, the method further includes: sending capability information of the terminal device to the access network device. The capability information indicates one or more of the following: whether the terminal device supports a neural network model, a type of a neural network model supported by the terminal device, computing power information of the terminal device, or storage capability information of the terminal device.

For technical effects of the second aspect or the optional implementations, refer to the descriptions of the technical effects of the first aspect or corresponding implementations.

According to a third aspect, a third communication method is provided. The method may be performed on a network device side. The method may be performed by using software, hardware, or a combination of software and hardware. For example, the method is performed by a network device, or is performed by a larger device including a network device, or is performed by a circuit system, where the circuit system can implement a function of a network device, or is performed by a network device or a network element of a network device with the assistance of an AI module independent of the network device. This is not limited. For example, the network device is an access network device, for example, a base station. The method includes: receiving first codeword information from a terminal device; and sending downlink data to the terminal device by using a first codeword corresponding to the first codeword information.

In this disclosure, the network device does not need to select a codeword from a fixed codebook agreed on in a protocol, but may directly use codeword information fed back by a terminal device. The codeword information fed back by the terminal device accords with a current communication scenario, so that a transmit beam corresponding to the codeword information can adapt to the current communication scenario. Therefore, in different communication scenarios, codeword information applying to the scenarios that is fed back by a terminal device can be obtained. The codeword information corresponds to, for example, a beam. According to the method provided in this disclosure, a beam that matches a communication scenario can be obtained, thereby improving communication performance. In addition, in this disclosure, a plurality of beam scanning processes based on a fixed codebook do not need to be performed, so that air interface overheads can be reduced. In addition, the beam corresponding to the codeword information fed back by the terminal device can be aligned with a direction of a main path of a downlink channel between the network device and the terminal device as much as possible, thereby improving a penetration capability of a signal sent by using the transmit beam, reducing path fading, increasing a propagation distance of the signal, and improving a coverage capability of the signal.

In an optional implementation, the method further includes: precoding first downlink data based on the first codeword, to obtain precoded data; and sending the precoded data to the terminal device.

In an optional implementation, the method further includes: sending K sounding signals to the terminal device based on K sounding signal codewords. One sounding signal codeword is used to send one sounding signal.

In an optional implementation, the method further includes: sending information about a third model to the terminal device. Input of the third model is information about a sounding signal, and output of the third model is characteristic information of a channel.

In an optional implementation, the method further includes: The third model is included in $M_1$ second-type models, $M_1$ is an integer greater than 1, the $M_1$ first-type models are in a one-to-one correspondence with the $M_1$ second-type models, input of the second-type model is information about a sounding signal, and output of the second-type model is characteristic information of a channel.

In an optional implementation, the third model is obtained through training based on a first training dataset, or the third model is obtained through training based on the first training dataset and assistance information of the terminal device, the first training dataset includes one or more downlink channel samples, and the first training dataset corresponds to a first channel type.

In an optional implementation, the method further includes: The first training dataset is obtained based on a second model, and the second model is used to obtain training data corresponding to the first channel type. Alternatively, the first training dataset is determined in at least one piece of channel estimation information from at least one terminal device based on location information of the at least one terminal device, and the first training dataset includes a part or all of the at least one piece of channel estimation information. Alternatively, the first training dataset is obtained by clustering at least one piece of channel estimation information from at least one terminal device, and the first training dataset includes a part or all of the at least one piece of channel estimation information.

In an optional implementation, the assistance information of the terminal device includes one or more of the following: location information of the terminal device, speed information of the terminal device, acceleration information of the terminal device, posture information of the terminal device, or movement direction information of the terminal device.

In an optional implementation, the assistance information of the terminal device is used to determine information about a path of the downlink channel, and the information about the path of the downlink channel is used to determine a direction and/or a coverage width corresponding to the first codeword information.

In an optional implementation, the method further includes: receiving capability information from the terminal device. The capability information indicates one or more of the following: whether the terminal device supports a neural network model, a type of a neural network model supported by the terminal device, computing power information of the terminal device, storage capability information of the terminal device, the location information of the terminal device, antenna configuration information of the terminal device, or sensor configuration information of the terminal device.

In an optional implementation, the computing power information of the terminal device indicates a complexity degree of a neural network that can be supported by the terminal device; the storage capability information of the terminal device indicates a scale of a neural network that can be stored by the terminal device; the location information of the terminal device indicates a type of a downlink channel corresponding to the terminal device;

the antenna configuration information of the terminal device is used to determine a neural network corresponding to the terminal device; and/or the sensor configuration information of the terminal device is used to determine a neural network corresponding to the terminal device.

For technical effects brought by the optional implementations of the third aspect, refer to the descriptions of the technical effects of the first aspect or corresponding implementations.

According to a fourth aspect, a fourth communication method is provided. The method may be performed on a terminal device side. The method may be performed by using software, hardware, or a combination of software and hardware. For example, the method is performed by a terminal device, or is performed by a circuit system, or is performed by a larger device including a terminal device. The circuit system can implement a function of a terminal device. The method includes: receiving K sounding signals from an access network device, where K is a positive integer; obtaining first codeword information based on information about the K sounding signals and a third model, where a first codeword corresponding to the first codeword information is used for precoding; and sending the first codeword information to the access network device.

In an optional implementation, the obtaining first codeword information based on information about the K sounding signals and a third model includes: inputting the information about the K sounding signals into the third model, to obtain the first codeword information; or inputting the information about the K sounding signals and assistance information of the terminal device into the third model, to obtain the first codeword information.

In an optional implementation, the assistance information of the terminal device includes one or more of the following: location information of the terminal device, speed information of the terminal device, acceleration information of the terminal device, posture information of the terminal device, or movement direction information of the terminal device.

In an optional implementation, the method further includes: receiving information about the third model from the access network device.

In an optional implementation, the method further includes: sending channel estimation information to the access network device. The channel estimation information is used to train the third model.

In an optional implementation, the method further includes: sending capability information of the terminal device to the access network device. The capability information indicates one or more of the following: whether the terminal device supports a neural network model, a type of a neural network model supported by the terminal device, computing power information of the terminal device, or storage capability information of the terminal device.

For technical effects brought by the optional implementations of the fourth aspect, refer to at least one of the following: the descriptions of the technical effects of the first aspect or corresponding implementations, the descriptions of the technical effects of the second aspect or corresponding implementations, or the descriptions of the technical effects of the third aspect or corresponding implementations.

According to a fifth aspect, a communication apparatus is provided. The communication apparatus may implement the method according to the first aspect or the third aspect. The communication apparatus has a function of the foregoing network device. The network device is, for example, a base station, or a baseband apparatus in a base station. In an optional implementation, the apparatus may include a one-to-one corresponding module for performing the method/operation/step/action described in the first aspect or the third aspect. The module may be implemented by a hardware circuit, software, or a hardware circuit in combination with software. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a collective term for the functional modules.

The transceiver unit (or the receiving unit) is configured to receive characteristic information of a downlink channel from a terminal device; and the processing unit is configured to obtain first codeword information based on the characteristic information of the downlink channel and a first model, where input of the first model includes the characteristic information of the downlink channel, output of the first model includes the first codeword information, and a first codeword corresponding to the first codeword information is used for precoding.

Alternatively, the transceiver unit (or the receiving unit) is configured to receive first codeword information from a terminal device; and the transceiver unit (or the sending unit) is configured to send downlink data to the terminal device by using a first codeword corresponding to the first codeword information. Alternatively, the transceiver unit (or the receiving unit) is configured to receive first codeword information from a terminal device;

and the processing unit is configured to send, by using the transceiver unit (or the sending unit), downlink data to the terminal device based on a first codeword corresponding to the first codeword information.

For another example, the communication apparatus includes a processor, coupled to a memory, and configured to execute instructions in the memory, to implement the method in the first aspect or the third aspect. Optionally, the communication apparatus further includes other components, for example, an antenna, an input/output module, and an interface. These components may be hardware, software, or a combination of software and hardware.

According to a sixth aspect, a communication apparatus is provided. The communication apparatus may implement the method according to the second aspect or the fourth aspect. The communication apparatus has a function of the foregoing terminal device. In an optional implementation, the apparatus may include a one-to-one corresponding module for performing the method/operation/step/action described in the second aspect or the fourth aspect. The module may be implemented by a hardware circuit, software, or a hardware circuit in combination with software. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to a related description in the fifth aspect.

The transceiver unit (or the receiving unit) is configured to receive K sounding signals from an access network device, where K is a positive integer; the processing unit is configured to obtain first characteristic information based on information about the K sounding signals and a third model, where the first characteristic information is characteristic information of a downlink channel, and the transceiver unit (or the sending unit) is configured to send the first characteristic information to the network device.

Alternatively, the transceiver unit (or the receiving unit) is configured to receive K sounding signals from an access network device, where K is a positive integer; the processing unit is configured to obtain first codeword information based on information about the K sounding signals and a third model, where a first codeword corresponding to the first codeword information is used for precoding; and the transceiver unit (or the sending unit) is configured to send the first codeword information to the access network device.

For another example, the communication apparatus includes a processor, coupled to a memory, and configured to execute instructions in the memory, to implement the method in the second aspect or the fourth aspect. Optionally, the communication apparatus further includes other components, for example, an antenna, an input/output module, and an interface. These components may be hardware, software, or a combination of software and hardware.

According to a seventh aspect, a computer-readable storage medium is provided. The computer-readable storage medium is configured to store a computer program or instructions, and when the computer program or the instructions are run, the method in any one of the first aspect to the fourth aspect is implemented.

According to an eighth aspect, a computer program product including instructions is provided. When the computer program product runs on a computer, the method according to any one of the first aspect to the fourth aspect is implemented.

According to a ninth aspect, a chip system is provided. The chip system includes a processor, and may further include a memory, configured to implement the method in any one of the first aspect to the fourth aspect. The chip system may include a chip, or may include a chip and another discrete component.

According to a tenth aspect, a communication system is provided, including the communication apparatus in the fifth aspect and the communication apparatus in the sixth aspect.

## BRIEF DESCRIPTION OF DRAWINGS

FIG. 1 is a schematic diagram of a communication system;
FIG. 2A is a schematic diagram of an application scenario;
FIG. 2B to FIG. 2E are schematic diagrams of several application frameworks of AI in a communication system;
FIG. 3 is a flowchart of a communication method;
FIG. 4 is a schematic diagram of joint training on a first-type model and a second-type model;
FIG. 5A is a schematic diagram of a first-type model;
FIG. 5B is a schematic diagram of a second-type model;
FIG. 6A and FIG. 6B are two schematic diagrams of a communication method;
FIG. 7A and FIG. 7B are a flowchart of another communication method; and
FIG. 8 is a schematic block diagram of a communication apparatus.

## DESCRIPTION OF EMBODIMENTS

To make objectives, technical solutions, and advantages of this disclosure clearer, the following further describes this disclosure in detail with reference to accompanying drawings.

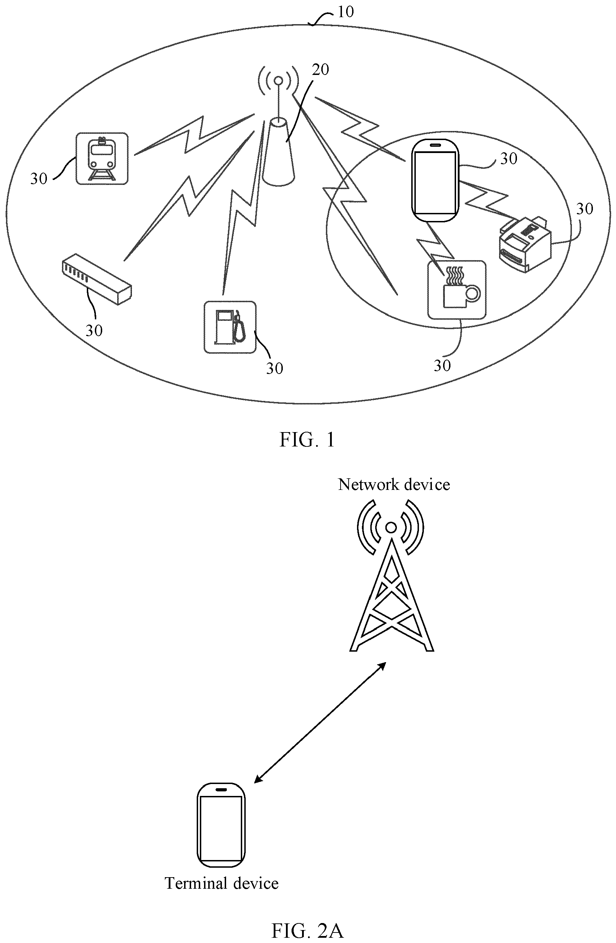

A technology provided in this disclosure may be applied to a communication system 10 shown in FIG. 1. The communication system 10 includes one or more communication apparatuses 30 (for example, a terminal device). The one or more communication apparatuses 30 are connected to one or more core network (core network, CN) devices via one or more access network (radio access network, RAN) devices 20, to implement communication between a plurality of communication devices. For example, the communication system 10 is a communication system that supports a 4th generation (4th generation, 4G) mobile communication technology (including long term evolution (long term evolution, LTE)), a communication system that supports a 5th generation (5th generation, 5G) mobile communication technology (sometimes also referred to as new radio, NR), a wireless fidelity (wireless fidelity, Wi-Fi) system, a cellular system related to the 3rd generation partnership project (3rd generation partnership project, 3GPP), a communication system that supports convergence of a plurality of wireless technologies, or a future-oriented evolved system.

The following separately describes in detail the terminal device and the RAN in FIG. 1.

1. Terminal device.

The terminal device may be referred to as a terminal for short. The terminal device may be a device having a wireless transceiver function. The terminal device may be mobile or fixed. The terminal device may be deployed on land, including indoor, outdoor, handheld, or vehicle-mounted forms, or may be deployed on a water surface (such as a ship), or may be deployed in air (for example, on an airplane, a balloon, or a satellite). The terminal device may include a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, a vehicle-mounted device, a wearable device, a terminal device in a future 5th generation (5th generation, 5G) network, a terminal device in a future evolved public land mobile network (public land mobile network, PLMN), or the like. The terminal device sometimes may also be referred to as a user equipment (user equipment, UE). Optionally, the terminal device may communicate with a plurality of access network devices supporting different technologies. For example, the terminal device may communicate with an access network device supporting LTE, may communicate with an access network device supporting 5G, and may be dual-connected to an access network device supporting LTE and an access network device supporting 5G. This is not limited in this disclosure.

In this disclosure, an apparatus configured to implement a function of the terminal device may be the terminal device, or may be an apparatus that can support the terminal device in implementing the function, for example, a chip system, a hardware circuit, a software module, or a hardware circuit plus a software module. The apparatus may be installed in the terminal device or may be used in a matching manner with the terminal device. In the technical solutions provided in this disclosure, an example in which the apparatus configured to implement the function of the terminal device is the terminal device and the terminal device is a UE is used to describe the technical solutions provided in this disclosure.

In this disclosure, the chip system may include a chip, or may include a chip and another discrete device.

2. RAN.

The RAN may include one or more RAN devices, for example, a RAN device 20. An interface between the RAN device and the terminal device may be a Uu interface (or referred to as an air interface). In future communication, the name of the interface may remain unchanged, or may be replaced with other names. This is not limited in this disclosure.

The RAN device is a node or a device that connects the terminal device to the radio network. The RAN device may also be referred to as a network device or a base station. The RAN device includes, for example but not limited to, a base station, a next generation NodeB (next generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a transmitting and receiving point (transmitting and receiving point, TRP), a transmitting point (transmitting point, TP), and/or a mobile switching center. Alternatively, the access network device may be at least one of a central unit (central unit, CU), a distributed unit (distributed unit, DU), a central unit control plane (CU control plane, CU-CP) node, a central unit user plane (CU user plane, CU-UP) node, an integrated access and backhaul (integrated access and backhaul, IAB) node, a radio controller in a cloud radio access network (cloud radio access network, CRAN) scenario, or the like. Alternatively, the access network device may be a relay station, an access point, a vehicle-mounted device, a terminal device, a wearable device, an access network device in a 5G network, an access network device in a future evolved public land mobile network (public land mobile network, PLMN), or the like.

In this disclosure, an apparatus configured to implement a function of the access network device may be the access network device, or may be an apparatus that can support the access network device in implementing the function, for example, a chip system, a hardware circuit, a software module, or a hardware circuit plus a software module. The apparatus may be installed in the access network device or may be used in a matching manner with the access network device. In the technical solutions provided in this disclosure, an example in which the apparatus configured to implement the function of the access network device is the access network device, and the access network device is a base station is used to describe the technical solutions provided in this disclosure.

(1) Protocol layer structure.

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

(2) Central unit (central unit, CU) and distributed unit (distributed unit, DU).

The RAN device may include a CU and a DU. A plurality of DUs may be all controlled by one CU. For example, an interface between the CU and the DU may be referred to as an F1 interface. A control plane (control plane, CP) interface may be F1-C, and a user plane (user plane, UP) interface may be F1-U. The CU and the DU may be obtained through division based on protocol layers of the radio network. For example, functions of the PDCP layer and a protocol layer above the PDCP layer are set on the CU, and functions of a protocol layer below the PDCP layer (for example, the RLC layer and the MAC layer) are set on the DU. For another example, functions of the protocol layer above the PDCP layer are set on the CU, and functions of the PDCP layer and the protocol layer below the PDCP layer are set on the DU.

It may be understood that the foregoing processing function division of the CU and the DU based on the protocol layers is merely an example, and there may be other division. For example, the CU or the DU may be obtained through division to have functions of more protocol layers. For another example, the CU or the DU may be obtained through division to have some processing functions of a protocol layer. In a design, some functions of the RLC layer and functions of protocol layers above the RLC layer are set on the CU, and remaining functions of the RLC layer and functions of protocol layers below the RLC layer are set on the DU. In another design, function division of the CU or the DU may alternatively be performed based on service types or other system requirements. For example, the division may be performed based on latency, functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. The RU has a radio frequency function.

Optionally, the DU and the RU may be obtained through division at the physical layer (physical layer, PHY). For example, the DU may implement higher-layer functions in the PHY layer, and the RU may implement lower-layer functions in the PHY layer. For sending, functions of the PHY layer may include cyclic redundancy check (cyclic redundancy check, CRC) code adding, channel coding, rate matching, scrambling, modulation, layer mapping, precoding, resource mapping, physical antenna mapping, and/or radio frequency sending. For receiving, functions of the PHY layer may include functions of CRC, channel decoding, rate dematching, descrambling, demodulation, layer demapping, channel detection, resource demapping, physical antenna demapping, and/or radio frequency receiving. The higher-layer functions of the PHY layer may include some functions of the PHY layer. For example, the some functions are closer to the MAC layer. The lower-layer functions of the PHY layer may include some other functions of the PHY layer. For example, the some other functions are closer to the radio frequency function. For example, the higher-layer functions of the PHY layer may include CRC code adding, channel coding, rate matching, scrambling, modulation, and layer mapping, and the lower-layer functions of the PHY layer may include precoding, resource mapping, physical antenna mapping, and radio frequency sending. Alternatively, the higher-layer functions of the PHY layer may include CRC code adding, channel coding, rate matching, scrambling, modulation, layer mapping, and precoding, and the lower-layer functions of the PHY layer may include resource mapping, physical antenna mapping, and radio frequency sending.

For example, a function of the CU may be implemented by one entity, or may be implemented by different entities. For example, the function of the CU may be further divided, that is, a control plane and a user plane are separated and implemented by using different entities: a control plane CU entity (namely, a CU-CP entity) and a user plane CU entity (namely, a CU-UP entity). The CU-CP entity and the CU-UP entity may be coupled to the DU, to jointly complete a function of the RAN device.

It should be noted that in the foregoing described architecture, signaling generated by the CU may be sent to the terminal device through the DU, or signaling generated by the terminal device may be sent to the CU through the DU. For example, RRC or PDCP layer signaling may be finally processed into physical layer signaling and sent to the terminal device, or may be converted from received physical layer signaling. In this architecture, the RRC or PDCP layer signaling may be considered as being sent through the DU, or sent through the DU and the RU.

Optionally, any one of the DU, the CU, the CU-CP, the CU-UP, and the RU may be a software module, a hardware structure, or a software module plus hardware structure. This is not limited. Different entities may exist in different forms. This is not limited. For example, the DU, the CU, the CU-CP, and the CU-UP are software modules, and the RU is a hardware structure. These modules and methods executed by the modules also fall within the protection scope of this disclosure.

In a possible implementation, the RAN device includes a CU-CP, a CU-UP, a DU, and an RU. For example, a method disclosed in this disclosure is performed by a DU, or a DU and an RU, or a CU-CP, a DU, and an RU. This is not limited. Methods performed by the modules also fall within the protection scope of this disclosure.

It should be understood that quantities of devices in the communication system shown in FIG. 1 are merely used as an example, and this disclosure is not limited thereto. In actual application, the communication system may include more terminal devices and more RAN devices, and may further include another device, for example, may include a core network device and/or a node configured to implement an artificial intelligence function.

The network architecture shown in FIG. 1 may apply to communication systems of various radio access technologies (radio access technology, RAT), for example, a 4G communication system, or a 5G (or referred to as new radio (new radio, NR)) communication system, or an intermediate system between an LTE communication system and a 5G communication system, where the intermediate system may also be referred to as a 4.5G communication system, or a future communication system, for example, a 6G communication system. The network architecture and the service scenario described in this disclosure are intended to describe the technical solutions of this disclosure more clearly, and do not constitute a limitation on the technical solutions provided in this disclosure. A person of ordinary skill in the art may know that, with evolution of a communication network architecture and emergence of a new service scenario, the technical solutions provided in this disclosure also apply to a similar technical problem.

In addition to communication between an access network device and a terminal device, the method provided in this disclosure may be used for communication between other communication devices, for example, communication between a macro base station and a micro base station in a wireless backhaul link, or communication between a first terminal device and a second terminal device in a sidelink (sidelink, SL). This is not limited. This disclosure is described by using communication between an access network device and a terminal device as an example.

The method provided in this disclosure relates to a machine learning process, and the machine learning is implemented by using, for example, a neural network. The neural network is a specific implementation form of a machine learning technology. According to a universal approximation theorem, the neural network can approximate any continuous function in theory, so that the neural network can learn any mapping. A conventional communication system needs to design a communication module with extensive expert knowledge, while a deep learning communication system based on a neural network may automatically discover an implicit pattern structure from a large quantity of datasets, and establish a mapping relationship between data, to obtain performance better than that of a conventional modeling method.

For example, a deep neural network (deep neural network, DNN) is a neural network with a large quantity of layers. Based on different network structures and usage scenarios, the DNN may include a feedforward neural network (feedforward neural network, FNN), a convolutional neural network (convolutional neural network, CNN), a recurrent neural network (recurrent neural network, RNN), and the like. A specific form of the DNN is not limited in this disclosure.

In this disclosure, unless otherwise specified, a quantity of nouns represents "a singular noun or a plural noun", that is, "one or more". The term "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. When representing a characteristic, the character "/" may represent an "or" relationship between associated objects. For example, A/B represent A or B. When representing an operation, the symbol "/" may represent a division operation. In addition, in this disclosure, the symbol "×" may be replaced with a symbol "*".

Ordinal numbers such as "first" and "second" mentioned in this disclosure are used to distinguish between a plurality of objects, and are not used to limit sizes, content, a sequence, a time sequence, application scenarios, priorities, importance degrees, or the like of the plurality of objects. For example, a first model and a second model may be a same model, or may be different models. In addition, the names do not indicate that parameters, priorities, application scenarios, importance degrees, or the like of the two models are different.

FIG. 2A shows a communication network architecture in the communication system 10 according to this disclosure. Any method embodiment provided subsequently applies to the architecture. A network device included in FIG. 2A is, for example, an access network device 20 included in the communication system 10, and a terminal device included in FIG. 2A is, for example, a communication apparatus 30 included in the communication system 10. The network device can communicate with the terminal device.

A machine learning technology in this disclosure is a specific implementation of an artificial intelligence (artificial intelligence, AI) technology. For ease of understanding, the following describes the AI technology. It may be understood that the description is not intended to limit this disclosure.

AI is a technology that simulates a human brain to perform complex computing. With improvement of data storage and capabilities, AI is increasingly applied.

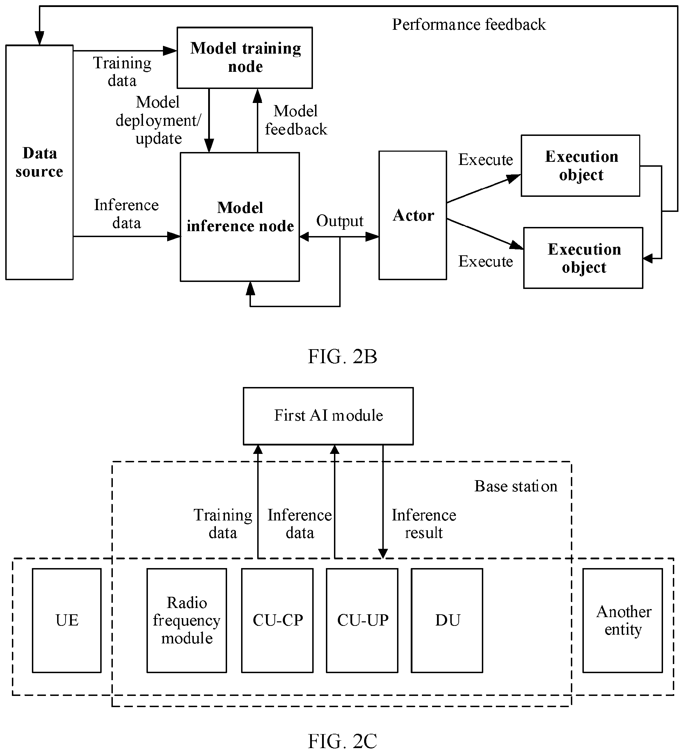

FIG. 2B is a schematic diagram of a first application framework of AI in a communication system. A data source (data source) is configured to store training data and inference data. A model training node (model training host) performs analysis or training based on the training data (training data) provided by the data source to obtain an AI model, and deploys the AI model on a model inference node (model inference host). The model inference node uses the AI model to perform inference based on the inference data provided by the data source, to obtain an inference result. The inference result is planned by an actor (actor) entity uniformly, and is sent to one or more execution objects (for example, a network entity) for execution.

For example, the AI model includes a network for generating codeword information. The network for generating codeword information is deployed on a network device side. An inference result of the network for generating codeword information is used to, for example, precode downlink data. For another example, the AI model includes a network for extracting channel characteristic information. The network for extracting channel characteristic information is deployed on a UE side. An inference result of the network for extracting channel characteristic information is fed back to, for example, the network device. The inference result may be used as input information of the network for generating codeword information.

In this application, the codeword information may be referred to as precoding information or precoding codeword information, and may be parameter information for beamforming processing on a signal, for example, a weighted value of beamforming. The parameter information for beamforming processing on a signal may also be referred to as a precoding matrix. It may be understood that the precoding matrix in this application includes a 1-dimensional vector matrix and a 2-dimensional vector matrix. Alternatively, the codeword information may be an information stream for restoring or reconstructing parameter information for beamforming processing on a signal, for example, an information stream obtained after the weighted value of beamforming or the precoding matrix is compressed. Based on the information stream, the weighted value or the precoding matrix may be restored or reconstructed.

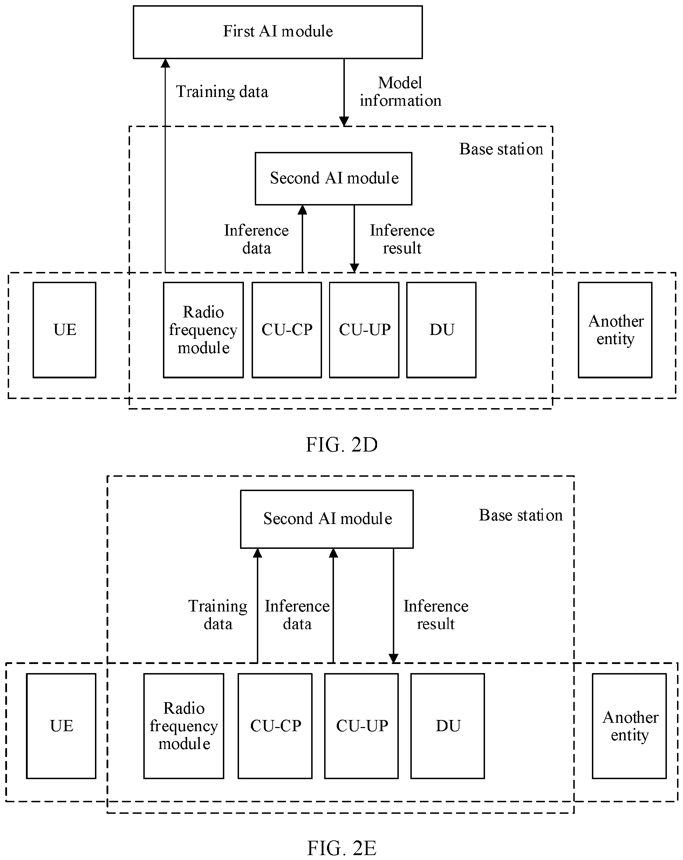

FIG. 2C, FIG. 2D, or FIG. 2E is a schematic diagram of a second application framework of AI in a communication system.

A first AI module independent of a base station receives training data. The first AI module performs analysis or training based on the training data, to obtain an AI model. For a parameter, the first AI module may perform inference by using a corresponding AI model and inference data, to obtain the parameter. Refer to FIG. 2C. Alternatively, the first AI module may send information about the AI model to a second AI module located in a base station (or described as being located in a RAN), and the second AI module performs inference by using the corresponding AI model and the inference data, to obtain the parameter. Refer to FIG. 2D. Alternatively, the AI model used by the second AI module for inference may be obtained by the second AI module by receiving the training data and perform training based on the training data. Refer to FIG. 2E. The AI model includes a network for generating codeword information. On a base station side, an inference result of the network for generating codeword information is used to, for example, precode downlink data. Optionally, the AI model includes a network for extracting channel characteristic information, and model information of the network for extracting channel characteristic information may be sent to a UE for the UE to perform inference.

It should be noted that in the frameworks in FIG. 2B to FIG. 2E, the AI model may be referred to as a model for short, and may be considered as a mapping from an input parameter (for example, an input matrix) to an output parameter (for example, an output matrix). For example, for the network for generating codeword information on the base station side, the input matrix may be a matrix determined based on received characteristic information of a downlink channel. The training data may include a known input matrix, or include a known input matrix and corresponding output matrix, and is used to train the AI model. The training data may be data from a base station, a CU, a CU-CP, a CU-UP, a DU, an RU, a UE, and/or another entity, and/or data inferred by using the AI technology. This is not limited. The inference data includes an input matrix, and is used to infer an output matrix by using the model. The inference data may be data from a base station, a CU, a CU-CP, a CU-UP, a DU, an RU, a UE, and/or another entity. The inferred matrix may be considered as policy information, and is sent to an execution object. The inferred matrix may be sent to the base station, the CU, the CU-CP, the CU-UP, the DU, the RU, or the UE for further processing, for example, generating codeword information.

In this disclosure, on a network side, the network for generating codeword information may be deployed in a network device (for example, the base station), for example, deployed in the RU, the DU, or the second AI module; or may be deployed in an AI device (for example, the first AI module) independent of the network device. This is not limited. Optionally, the base station may include one or more second AI modules. For example, for at least one module of the CU, the CU-CP, the CU-UP, the DU, and the RU in the base station, each of the at least one module may include a second AI module (a second AI entity) of the model to implement a corresponding AI function. An inference result of the network for generating codeword information may be obtained by the network device through inference, or may be sent to the network device after inferred by the first AI module. For brevity of description, this disclosure is described by using an example in which the network for generating codeword information is deployed in the network device.

In this disclosure, the network for extracting channel characteristic information is deployed in the UE, and the UE may perform inference by using the network.

The following describes, with reference to accompanying drawings, methods provided in this disclosure. In accompanying drawings corresponding to embodiments of this disclosure, all steps represented by dashed lines may be optional steps. In these methods, steps or operations included are merely examples, and other operations or variations of various operations may be further performed in this disclosure. In addition, the steps may be performed in a different sequence than that presented in this disclosure, and not all operations may need to be performed.

Because large-scale antenna systems associated with beam selection processes have large power consumption, large sizes, and high costs, most are deployed on a network device side. Therefore, in embodiments of this disclosure, a downlink beam selection process on an access network device side is used as an example for description. Because an uplink and a downlink of a system, for example, a time division duplex (time division duplex, TDD) system, may be reciprocal, solutions in embodiments of this disclosure may be easily extended to an uplink receive beam selection process on the access network device side. For example, an optimal beam used by the access network device side for downlink sending to a UE may also be used as an optimal beam used when the access network device performs uplink receiving from the UE.

This disclosure provides a method. In the method, an access network device does not need to select a codeword from a fixed codebook, but may obtain codeword information based on characteristic information, fed back by a terminal device, of a downlink channel. The characteristic information, fed back by the terminal device, of the downlink channel accords with a current communication scenario, so that a transmit beam corresponding to the codeword information generated based on the characteristic information can adapt to the current communication scenario. For example, in different communication scenarios, according to the method, codeword information applying to the scenarios may be obtained based on characteristic information, fed back by a terminal device, of a downlink channel. The codeword information corresponds to, for example, a beam. According to the method provided in this disclosure, a beam that matches a communication scenario can be obtained, thereby improving communication performance. The following describes the method by using some embodiments.

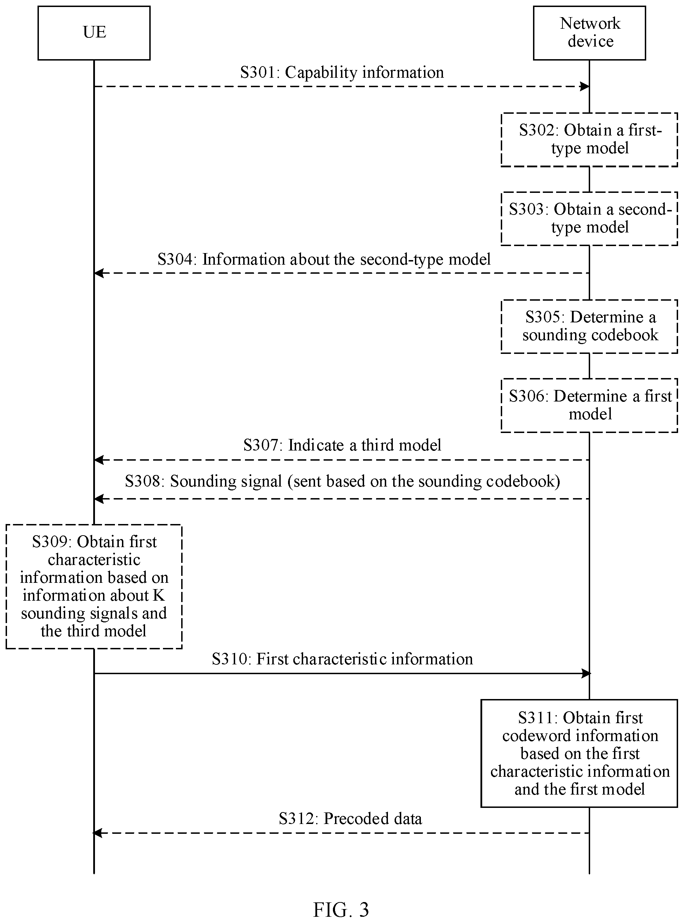

FIG. 3 is a flowchart of a first communication method according to this disclosure.

Optionally, S301: A UE sends capability information to an access network device. Correspondingly, the access network device receives the capability information from the UE. The capability information may indicate some capabilities or all capabilities of the UE.

For example, the UE may send the capability information to the access network device when accessing the access network device, or the UE may send the capability information to the access network device after accessing the access network device. The UE may actively send the capability information to the access network device, or the UE may send the capability information to the access network device after receiving a message from the access network device and used to request the capability information. The capability information may indicate one or more of the following: whether the UE supports a neural network model, a type of a neural network model supported by the UE, computing power information of the UE, storage capability information of the UE, location information of the UE, a quantity of radio frequency channels of the UE, antenna configuration information of the UE, or sensor configuration information of the UE. The type of the neural network model supported by the UE includes, for example, one or more of a CNN, an RNN, or a random forest model, or the UE may support other types of neural network models. The storage capability information of the UE indicates, for example, a size of storage space of the UE that may be used to store a neural network model; and/or for example, the storage capability information of the UE may indicate a scale of a neural network that can be stored by the UE, for example, may indicate one or more of the following that can be stored by the UE: a quantity or a maximum quantity of neural networks, a quantity or a maximum quantity of layers of each neural network, a quantity or a maximum quantity of neurons included in each neural network, or a quantity or a maximum quantity of parameters of each neural network. The computing power information of the UE may indicate computing capability information in running a neural network model by the UE, for example, indicate information such as a computing speed of a processor of the UE and/or a volume of data that can be processed by the processor of the UE; and/or the computing power information of the UE may indicate a complexity degree of a neural network that can be supported by the UE, for example, may indicate one or more of a quantity or a maximum quantity of layers of the neural network that can be supported by the UE, a quantity or a maximum quantity of included neurons, or a quantity or a maximum quantity of parameters of the neural network. The location information of the UE can indicate a channel environment in which the UE is located, or it is understood that the location information of the UE may indicate a type of a downlink channel corresponding to the UE. The antenna configuration information (for example, one or more of an antenna quantity, a polarization direction, or an antenna panel quantity of the UE may be configured) and/or the sensor configuration information of the UE may be used to determine a neural network corresponding to the UE and/or a sounding codebook corresponding to the UE.

For example, the capability information indicates whether the UE supports a neural network model. For the access network device, if the UE does not support a neural network model, the access network device may not send a corresponding neural network model to the UE. For example, this disclosure relates to a second-type model, the second-type model is a model configured to extract channel characteristic information, the second-type model is used by the UE, and the access network device sends information about the second-type model to the UE. However, if the UE does not support a neural network model, the access network device may not send the information about the second-type model to the UE. In this case, the access network device may not use a first-type model (a model configured to generate codeword information), or the access network device may continue to use the first-type model, but the UE does not use the second-type model.

For another example, if the capability information of the UE indicates the type of the neural network model supported by the UE, the access network device may refer to the capability information of the UE when training a model, for example, may train a neural network model that can be supported by the UE.

For still another example, if the capability information of the UE indicates the computing power information of the UE, the access network device may refer to the capability information of the UE when training a neural network model. For example, some or all second-type models trained by the access network device may meet the computing power information of the UE.

The antenna configuration information of the UE includes, for example, information such as a quantity of antennas of the UE and/or a polarization direction of an antenna. The sensor information of the UE includes, for example, sensor type information of the UE and/or a sensor parameter of the UE. The sensor type information of the UE may indicate a type of a sensor of the UE. For example, the UE has a GPS, a posture sensor, or a motion sensor.

It may be understood that, if the UE sends the capability information to the access network device, when training a neural network model or configuring (or sending) a neural network model for the terminal device, the access network device may refer to the capability information of the UE, so that the neural network model better fits a capability of the UE. However, S301 is an optional step, that is, the UE may not send the capability information to the access network device. If the method does not include S301 or the access network device does not receive the capability information from the UE, when training a neural network model or configuring (or sending) a neural network model for the terminal device, the access network device may not need to refer to the capability information of the UE. Alternatively, the access network device may obtain the capability information of the UE by using subscription information of the UE, and the UE does not need to additionally report the capability information.

Optionally, S302: The access network device obtains a first-type model. The first-type model is, for example, a neural network model.

For example, the access network device may obtain the first-type model through training. Alternatively, the first-type model may be obtained through training by a third party. The third party is, for example, an AI node or an AI entity. After training, the AI node or the AI entity may send the first-type model to the access network device, and the access network device may directly use the model. Optionally, the AI entity may be located in a core network device or operation, administration and maintenance (operation, administration and maintenance, OAM), and the OAM may be referred to as network management. Alternatively, the first-type model may be specified in a protocol without online training. For example, after the first-type model is obtained through offline training, information about the first-type model is agreed on in a protocol. Alternatively, the access network device may obtain the first-type model in another manner, for example, download the first-type model from outside (for example, from a core network device, OAM, or another device).

The first-type model may be configured to determine codeword information based on characteristic information of a channel. For example, input information of the first-type model may include the characteristic information of the channel, and output information may include the codeword information. For another example, the access network device may process the characteristic information of the channel to obtain input information of the first-type model, so that the codeword information may be obtained by using the first-type model. Therefore, the first-type model may also be referred to as a codeword generation model, a beam generation model, a transmission beam generation model, or the like. The name is not limited. The characteristic information of the channel may be used to obtain the input information of the first-type model or obtain some input information of the first-type model.

For example, input of the first-type model is characteristic information of a channel 38, and a format of the input is a vector of $B \times 1$. Therefore, the characteristic information of the channel may also be referred to as a channel characteristic information vector. B is a positive integer. An element in the channel characteristic information vector is a quantized number, and a quantization bit width is Q.

Output of the first-type model is codeword information. The codeword information may be understood as information about a codeword, and corresponds to the codeword. The codeword may be used to precode downlink data. Precoding the downlink data may implement beamforming on the downlink data. The information about the codeword may be the codeword, or the information about the codeword is not the codeword, but the codeword can be obtained based on the information about the codeword, that is, a precoding matrix or a weighted value of beamforming may be restored or reconstructed based on the codeword information. For example, the codeword is a one-dimensional vector. Therefore, the "codeword" may also be referred to as a "codeword vector". The codeword vector specifies a weighting coefficient of each antenna or each antenna port. A quantity of elements in the codeword vector is equal to a quantity of antennas. Each element in the codeword vector may be a complex number. For example, there are F antennas or F antenna ports, and a corresponding codeword vector is $[w_1, ...... , w_F]$. A complex number $w_i$ may also be represented as $w_i = a_i * e^{j*\phi_i} = a_i \cdot cos\phi_i + j * a_i * sin\phi_i$, j is an imaginary unit, whose square is equal to -1, $a_i$ represents an amplitude of $w_i$, and $\phi_i$ represents a phase of $w_i$. Therefore, the codeword vector may also be considered to include an amplitude vector and a phase vector. For example, the amplitude vector is $[a_1 ... a_F]$, and the phase vector is $[\phi_1 ... \phi_F]$. If the codeword can be obtained based on the codeword information, the codeword information may be presented in a plurality of forms. For example, in an implementation form of the codeword information, the codeword information is a vector whose dimension is $F \times 1$, F is a quantity of antennas or antenna ports of the access network device, and an element of the vector may be a complex number. For another example, in another implementation form of the codeword information, the codeword information is a matrix whose dimension is $F \times 2$, F is a quantity of antennas or antenna ports of the access network device, elements in a first column (a vector whose dimension is $F \times 1$) of the matrix are real numbers, and represent amplitudes of the F antennas or antenna ports, and elements in a second column (also a vector whose dimension is $F \times 1$) of the matrix are real numbers, and represent phase shifts of the F antennas or antenna ports. For example, a piece of codeword information includes an amplitude $a_i$ and a

phase $\phi_i$ of an antenna i, and i is an integer from 1 to F. In this case, it may be obtained based on the codeword information that in a codeword corresponding to the codeword information, a complex number of the ith antenna or antenna port is expressed as $a_i * cos\phi_i + j * a_i sin\phi_i$, that is, the codeword may be obtained based on the information about the codeword, or in other words, the codeword corresponding to the codeword information is obtained.

In this disclosure, for example, the access network device trains the first-type model. The access network device performs training based on training data, to obtain the first-type model. For example, in this disclosure, the access network device may obtain $M_1$ first-type models. $M_1$ is an integer greater than or equal to 1. Generally, there may be a plurality of pieces of training data for training a model. Therefore, it may also be considered that the access network device obtains the $M_1$ first-type models through training by using a training dataset. The training dataset may include one or more pieces of training data. The training data is, for example, a downlink channel sample. Therefore, the training dataset may include one or more downlink channel samples. After obtaining the training dataset, the access network device may obtain the $M_1$ first-type models through training based on the training dataset. The access network device may obtain the training dataset in a plurality of manners. For example, at least one UE covered by the access network device may estimate a downlink channel, and send channel estimation information to the access network device. For example, one UE may send one piece of channel estimation information to the access network device. In this case, the access network device may receive at least one piece of channel estimation information. Apart or all of the at least one piece of channel estimation information may be used as training data included in the training dataset. For another example, if a second model may be configured to generate training data, the access network device may obtain the training dataset by using the second model. For example, the second model is specified in a protocol, or the second model may be obtained through training by a UE, or the second model may be obtained through training by the access network device. Optionally, the downlink channel sample is, for example, a downlink channel response. For example, for a received signal Y of a UE, Y=C*d+n, C represents the downlink channel response, d represents a downlink signal sent by the network device, and n represents noise.

In actual communication, there are various communication scenarios, and corresponding channel types may be different. For example, channel types corresponding to communication scenarios such as a square, a subway station, an office, and an alley are different from each other. Therefore, if a trained model better matches an actual communication environment, for example, better matches a channel type, an application effect of the model is better. It may be difficult for one first-type model to apply to all channel types. Therefore,

$M_1$ may be greater than 1. Each of the $M_1$ first-type models may apply to one or more channel types. Channel types to which different first-type models apply may be the same, or may be different, or not completely the same. For example, one first-type model applies to a channel type 1, and another first-type model also applies to the channel type 1. It is considered as that channel types to which the two first-type models apply are the same. For another example, one first-type model applies to a channel type 1 and a channel type 2, and another first-type model applies to a channel type 3. It is considered that channel types to which the two first-type models apply are different. For still another example, one first-type model applies to a channel type 1 and a channel type 2, and another first-type model applies to the channel type 1, or applies to the channel type 1 and a channel type 3. It is considered that channel types to which the two first-type models apply are not completely the same.

Alternatively, the first-type models may not be related to channel types. For example, a first-type model may apply to any channel type.

If the first-type models are related to channel types, to enable a first-type model to apply to a channel type, an implementation is to obtain the first-type model through training by using a training dataset corresponding to the channel type. That is, the training dataset of the model may be related to the channel type. In this case, if $M_1$ is greater than 1, and these first-type models correspond to different channel types, training datasets used for training to obtain these first-type models may also be different. For example, if one first-type model corresponds to a channel type 1, a training dataset used for training to obtain the first-type model applies to the channel type 1. If another first-type model corresponds to a channel type 2 and a channel type 3, a training dataset used for training to obtain the first-type model applies to the channel type 2 and the channel type 3. For example, the $M_1$ first-type models include a first model, and the first model is used, for example, between the access network device and the UE in S301. A training dataset used for training to obtain the first model may be referred to as a first training dataset. The first training dataset applies to a channel type corresponding to the first model, or in other words, applies to a channel type of a downlink channel between the access network device and the UE.

There may be a plurality of manners for obtaining a training dataset related to a channel type. For example, at least one UE covered by the access network device may estimate a downlink channel, and send channel estimation information to the access network device. For example, one UE may send one piece of channel estimation information to the access network device. In this case, the access network device may receive at least one piece of channel estimation information. The access network device may cluster the at least one piece of channel estimation information, to obtain A pieces of channel estimation information applying to a first channel type.

The A pieces of channel estimation information may be used as A pieces of training data in a training dataset that is used to train a first-type model corresponding to the first channel type. In other words, the A pieces of channel estimation information in the at least one piece of channel estimation information may belong to the training dataset, and the A pieces of channel estimation information correspond to (or apply to) the first channel type. The channel estimation information herein is, for example, estimation information of a channel response, that is, estimation information of a downlink channel response. For example, as described above, for a received signal Y of a UE, Y=C*d+n, and C represents a downlink channel response. In this case, the channel estimation information is, for example, information obtained by estimating C.

For another example, at least one UE covered by the access network device may estimate a downlink channel, and send channel estimation information to the access network device. For example, one UE may send one piece of channel estimation information to the access network device. In this case, the access network device may receive at least one piece of channel estimation information. The access network device may determine A pieces of channel estimation information from the at least one piece of channel estimation information based on location information of the at least one UE. The A pieces of channel estimation information apply to the first channel type, and the A pieces of channel estimation information may be used as A pieces of training data in the training dataset that is used to train the first-type model corresponding to the first channel type. For example, the access network device may determine a type of a downlink channel between the access network device and each of the at least one UE based on the location information of the at least one UE. For example, if the access network device determines that types of downlink channels between the access network device and A UEs in the at least one UE are the first channel type, channel estimation information sent by the A UEs applies to the first channel type.

For still another example, the second model is, for example, specified in a protocol, and the second model may be configured to generate training data corresponding to the first channel type.

For yet another example, the second model is obtained through training by a UE, or the second model may be obtained through training by the access network device. For example, the UE or the access network device may perform training according to a machine learning method, to obtain a second model that meets actual channel probability distribution, that is, the second model applies to the first channel type.

Alternatively, the first-type model may be trained by another device. For example, the another device may obtain a corresponding training dataset to train $M_1$ first-type models, and may send the first-type models to the access network device after training, or the access network device may actively download the $M_1$ first-type models from the another device. For a training manner of the another device, for example, refer to the foregoing training manner of the access network device.

Alternatively, the first-type model may be predefined in a protocol. In this case, the first-type model does not need to be obtained through training, and S302 may not be performed.

In addition, in this disclosure, the access network device may determine codeword information based on a sounding codebook. For example, the codeword information determined based on the sounding codebook is referred to as sounding signal codeword information. A codeword corresponding to the sounding signal codeword information is referred to as a sounding signal codeword, and the sounding signal codeword is used to send a sounding signal. For example, a sounding signal codeword may be used to precode a corresponding sounding signal. For example, the sounding codebook is specified in a protocol, or is configured by the access network device. For example, there are one or more sounding codebooks, and the access network device may use one of the sounding codebooks. For example, each of the $M_1$ first-type models obtained by the access network device can apply to all the sounding codebooks. Alternatively, if $M_1$ is greater than 1, the plurality of first-type models may correspond to respective sounding codebooks. For example, in the $M_1$ first-type models, at least two first-type models correspond to different sounding codebooks.

For example, one first-type model may correspond to one or more channel types, and may correspond to one or more sounding codebooks.

The first-type model is used by the access network device. For example, the access network device may receive characteristic information of a downlink channel from a UE, and may determine codeword information based on the first-type model.

Optionally, S303: The access network device obtains a second-type model. The second-type model is, for example, a neural network model.

For example, the access network device may obtain the second-type model through training. Alternatively, the second-type model may be obtained through training by a third party. The third party is, for example, an AI node or an AI entity. After training, the AI node or the AI entity may send the second-type model to the access network device, and the access network device may directly use the model. Optionally, the AI entity may be located in a core network device or OAM. Alternatively, the second-type model may be specified in a protocol without online training. For example, after the second-type model is obtained through offline training, information about the second-type model is agreed on in a protocol. Alternatively, the access network device may obtain the second-type model in another manner, for example, download the second-type model from outside (for example, from a core network device, OAM, or another device).

The second-type model may be configured to determine characteristic information of a channel based on information about a received sounding signal. For example, input information of the second-type model may include the information about the sounding signal, and output information may include the characteristic information of the channel. Therefore, the second-type model may also be referred to as a channel characteristic extraction model, a characteristic extraction model, or the like. The name is not limited. Optionally, in this disclosure, an output dimension of the second-type model is agreed on, so that a dimension of the characteristic information, output by the second-type model, of the channel can be restricted. For example, when the second-type model is trained, it may be agreed on that input is information about a signal (for example, information about a sounding signal), and an output dimension of the second-type model is specific, for example, referred to as a first dimension. In this case, after information about a signal is input into the second-type model, information of the first dimension that is output by the second-type model is characteristic information of a channel. This process may be considered as extracting characteristic information of a channel. In embodiments of this disclosure, the sounding signal is, for example, a reference signal, and the reference signal includes, for example, a channel state information (channel state information, CSI) reference signal (reference signal, RS) or a synchronization signal block (synchronization signal block, SSB).

For example, input of the second-type model is information about a sounding signal. For example, a dimension of the information about the sounding signal is $D \times 1$. D is a quantity of sounding signals sent by the access network device, that is, a quantity of pieces of precoded data sent by the access network device. The information about the sounding signal may be information about a sounding signal received by a UE. For example, it can be learned from the foregoing description that $Y = C*d + n$, d represents a sounding signal sent by the network device, and Y represents the information about the sounding signal received by the UE.

For example, output of the second-type model is characteristic information of a channel, or in other words, is a channel characteristic information vector. The channel characteristic information vector is a signal of an agreed dimension. The channel characteristic information vector output by the second-type model may be represented as $z = [z_1, z_2, \ldots, z_M]$. M is the agreed output dimension, that is, the output dimension of the second-type model. For example, a channel characteristic information vector is a vector whose dimension is $B \times 1$. B is a positive integer. In addition, an element in the channel characteristic information vector may be a quantized number, and a quantization bit width is Q.

The first-type model is used by the access network device, and the second-type model is used by a UE. The first-type model may determine codeword information based on input channel characteristic information, and the second-type model is used to extract channel characteristic information. For example, output information of the second-type model may be used as input information of the first-type model. Therefore, the first-type model and the second-type model may correspond to each other. For example, a quantity of first-type models is equal to a quantity of second-type models, for example, both are $M_1$, and the first-type models and the second-type models are in a one-to-one correspondence. For example, the access network device obtains the second-type model through training. To enable the first-type model to correspond to the second-type model, optionally, the access network device may perform joint training on the first-type model and the second-type model. In this case, the second-type model may also be obtained through training by using a training dataset used to train the first-type model. If there are a plurality of training datasets used to train the first-type models, a same training dataset may be used for a corresponding pair of a first-type model and a second-type model. For example, $M_1$ second-type models include a third model, and the third model corresponds to the first model in the $M_1$ first-type models. That is, the third model applies to the UE in S301. If the first model is obtained through training by using the first training dataset, the third model may also be obtained through training by using the first training dataset. For details about the training dataset, refer to the foregoing description. Alternatively, when the second-type models are trained, in addition to a training dataset, assistance information of a UE may be used. In other words, the second-type model may be obtained through training based on the training dataset and the assistance information of the UE. For example, if there is no correspondence between the second-type models and channel types, assistance information used to train any one of the $M_1$ second-type models may come from some or all UEs served by the access network device, and assistance information used to train different second-type models may come from same UEs, or may come from UEs that are not completely the same, or may come from completely different UEs. Alternatively, if there is a correspondence between the second-type models and channel types, assistance information used to train a second-type model corresponding to a channel type may come from a UE, where a downlink channel between the UE and the access network device belongs to the channel type. That is, if the access network device obtains assistance information of a plurality of UEs, the access network device may determine types of downlink channels between the access network device and these UEs, so that the assistance information of these UEs may be used to train different second-type models. For example, assistance information used to train the third model may include assistance information of the UE in S301. Alternatively, even if there is a correspondence between the second-type models and channel types, the channel types may not be distinguished for assistance information used to train the second-type models. That is, assistance information used to train second-type models corresponding to different channel types may come from same UEs, or may come from UEs that are not completely the same, or may come from completely different UEs.

Assistance information of a UE includes, for example, one or more of the following: location information of the UE, speed information of the UE, acceleration information of the UE, posture information of the UE, or movement direction information of the UE. In addition, the assistance information of the UE may further include other information, for example, including information such as an image and/or a video from a photographing apparatus (for example, an image capture apparatus and/or a video capture apparatus). The photographing apparatus may be disposed inside the UE as a functional module of the UE. Alternatively, the photographing apparatus and the UE are independent of each other, but the photographing apparatus can communicate with the UE. Alternatively, the photographing apparatus can communicate with the access network device, so that the assistance information of the UE can be directly sent to the access network device without being forwarded by the UE. In addition, the posture information of the UE includes, for example, one or more of the following: pitch information, tilt information, or rotation information of the UE in space, or may further include other posture information of the UE in space. For example, the posture information of the UE may be understood as a direction of a normal direction of the UE in a three-dimensional coordinate system.

Optionally, after a second-type model is obtained through training, if assistance information of a UE is used in a training process of the second-type model, when the UE uses the second-type model, the assistance information of the UE and information about a reference signal received by the UE may be input together into the second-type model. The assistance information of the UE may assist in extracting characteristic information of a downlink channel, so that the characteristic information, extracted by the second-type model, of the downlink channel is more accurate. For example, channel reflection paths of UEs at a same geographical location and in a same movement direction are supposed to be similar, and quantities and directions of a plurality of paths of channels are also supposed to be similar. For another example, a movement track of a UE may be deduced based on a speed and/or an acceleration of the UE, so that a quantity of a plurality of paths and/or an angle change range of a main path of a channel may be predicted, and may be used to design a direction, a width, or the like of a transmit beam corresponding to codeword information obtained by the access network device. For still another example, the assistance information of the UE further includes the information such as the image and/or the video from the photographing apparatus, and the information may be used to deduce a blocking status of a channel, to predict directions and a quantity of a plurality of paths in the channel. Assistance information of a plurality of UEs may be used when one second-type model is trained. For example, when a second-type model corresponding to a channel type is trained, assistance information of one or more UEs may be used, where types of downlink channels between the access network device and the UEs are the channel type. For a given UE, when the UE uses a second-type model, assistance information that is input into the second-type model may include assistance information of the UE.

For example, the access network device may obtain assistance information of one or more UEs by using an emulation platform. Alternatively, some or all UEs served by the access network device may send assistance information to the access network device, so that the access network device may obtain the assistance information of the one or more UEs.

Similar to the first-type model, one second-type model may correspond to one or more channel types, and may correspond to one or more sounding codebooks. Optionally, if the second-type models correspond to channel types, and assistance information of a UE participates in training the second-type models, assistance information used when the access network device trains a second-type model may be assistance information of a UE corresponding to a channel type corresponding to the second-type model. For example, the access network device trains a second-type model A, and the second-type model A corresponds to a channel type A. In this case, the access network device may train the second-type model A by using assistance information of a UE corresponding to the channel type A (which may be understood as that a type of a downlink channel between the access network device and the UE is the channel type A) and the first training dataset.

The access network device performs joint training on the first-type model and the second-type model, and a loss function of the training is, for example, signal strength received by the UE after a beam corresponding to codeword information output by the first-type model is used to send a reference signal and the reference signal is transmitted through a downlink channel. A mature backpropagation method, for example, a random gradient descent method, may be used when a model parameter is optimized based on the loss function, to obtain an optimal model parameter by using an iterative algorithm. This training method is an unsupervised learning manner. The unsupervised learning means that based on collected samples, an internal pattern of the samples is autonomously discovered by using an algorithm.

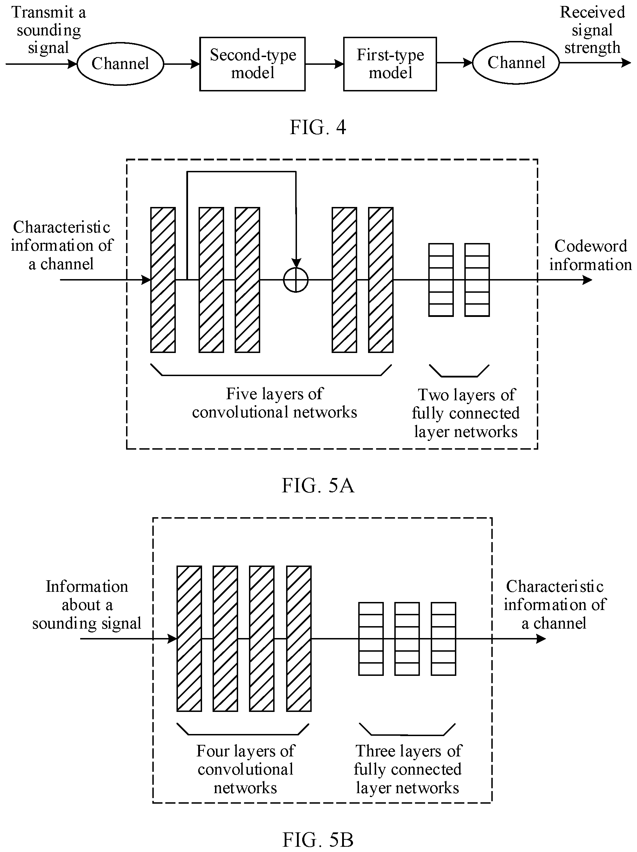

FIG. 4 is a schematic diagram of performing joint training on a first-type model and a second-type model by an access network device. It can be learned from FIG. 4 that, for example, a training process includes: The access network device sends a reference signal (a sounding signal in FIG. 4). The reference signal is transmitted to a UE through a downlink channel. The UE extracts characteristic information of the channel based on the second-type model, and sends the characteristic information of the channel to the access network device. The access network device inputs the received characteristic information of the channel into the first-type model, to obtain codeword information output by the first-type model, and continues to send a reference signal by using the codeword information. After the reference signal reaches the UE through the downlink channel, the UE may determine received signal strength.

FIG. 5A is an example diagram of a first-type model. FIG. 5B is an example diagram of a second-type model. In FIG. 5A, input information of the first-type model first passes through five layers of convolutional neural networks, a jumper structure is introduced at a second layer of convolutional neural network and a third layer of convolutional neural network, output of the five layers of convolutional neural networks passes through two layers of fully connected neural networks, and finally, codeword information is output. In FIG. 5B, input information of the second-type model first passes through four layers of convolutional neural networks, output of the four layers of convolutional neural networks then passes through three layers of fully connected neural networks, and finally, characteristic information of a channel is output. Structures of the models shown in FIG. 5A and FIG. 5B are merely examples. For example, a structure of the first-type model may not be the structure shown in FIG. 5A. For example, the first-type model may include only a convolutional network, or may include another network in addition to a convolutional network and a fully connected layer network. The same applies to the second-type model.

Optionally, a structure of the first-type model may be the same as a structure of the second-type model. For example, for structures of the first-type model and the second-type model, refer to FIG. 5A. Alternatively, a structure of the first-type model may be different from a structure of the second-type model. For example, for the structure of the first-type model, refer to FIG. 5A, and for the structure of the second-type model, refer to FIG. 5B. Optionally, if the first-type model and the second-type model have a same structure, the first-type model and the second-type model may be completely the same, that is, the first-type model and the second-type model are actually a same model, but are deployed on different nodes. Alternatively, if the first-type model and the second-type model have a same structure, the first-type model and the second-type model may be not completely the same or completely different, that is, the first-type model and the second-type model are different models. For example, for a first-type model and a second-type model that have a same structure, if their neural network parameters are completely the same, it is considered that the two are completely the same. Alternatively, if their neural network parameters are not completely the same (for example, some are the same, and the others are different), it is considered that the two are not completely the same. Alternatively, if their neural network parameters are completely different, it is considered that the two are completely different. The neural network parameter includes, for example, a weight parameter and/or an activation function of a neuron.

Alternatively, the second-type model may be trained by another device (for example, a core network device or OAM). For example, the another device may obtain a corresponding training dataset to train $M_1$ second-type models, or the another device may obtain a corresponding training dataset and assistance information of a UE to train $M_1$ second-type models, and may send the second-type models to the access network device after training, or the access network device may actively download the $M_1$ second-type models from the another device. For a training manner of the another device, for example, refer to the foregoing training manner of the access network device. For example, if both the first-type model and the second-type model are trained by a same device, the device may use a joint training manner.

The second-type model is used by a UE. For example, the UE receives a sounding signal from the access network device, and may extract characteristic information of a channel based on the second-type model. Alternatively, the UE may directly determine the characteristic information of the channel based on information about the received sounding signal without the second-type model. In this case, the access network device may not need to obtain the second-type model through training, and S303 may not be performed.

Alternatively, the second-type model may be predefined in a protocol, and S303 does not need to be performed.

For example, the first-type model and the second-type model are obtained through training (training by the access network device or training by a third party). An offline training manner may be used, that is, the first-type model and/or the second-type model are/is obtained through training before a data transmission process starts. S302 and S303 may be considered as the offline training manner. Alternatively, the first-type model and/or the second-type model may be trained in an online training manner. That is, the first-type model and/or the second-type model may be trained in a subsequent process of data transmission between the access network device and a UE, to continuously optimize the first-type model and/or the second-type model. Alternatively, the first-type model and/or the second-type model may be trained in both an offline manner and an online manner, so that trained models are more accurate.

Optionally, S304: The access network device sends information about the second-type model to the UE. Correspondingly, the UE receives the information about the second-type model from the access network device.

After obtaining the $M_1$ second-type models, the access network device may send information about some or all of the $M_1$ second-type models to the UE. For example, the access network device broadcasts the infor-

mation about the $M_1$ second-type models. Alternatively, the access network device may determine a second-type model applying to the UE (for example, the access network device determines, based on a type of a channel between the access network device and the UE, a second-type model applying to the UE), and sends, to the UE, information about the second-type model applying to the UE, instead of sending the information about all the $M_1$ second-type models to the UE, thereby reducing a redundant transmission process.

The information about the second-type model includes, for example, one or more of structure information, a parameter, or an index of the second-type model. Structure information of a neural network indicates, for example, at least one of the following: a quantity of layers of the neural network, a quantity of neurons at each layer of the neural network, an input dimension and/or an output dimension of each layer of the neural network, or a cascading structure between layers of the neural network. A parameter of the neural network indicates, for example, a weight parameter and/or an activation function of a neuron included in the neural network. If there are a plurality of second-type models, each second-type model may correspond to a unique index, and the access network device may send the index corresponding to the second-type model to the UE.

To reduce air interface overheads for sending the second-type model, the access network device may compress the second-type model. In this case, a compressed second-type model may be sent in S304. A model compression method includes but is not limited to one or more of model pruning, model distillation, or model quantization. Model pruning means that some parameters of the second-type model are sent to the UE, while a remaining parameter is not sent. The UE obtains the some parameters of the second-type model, and does not obtain the remaining parameter. This is equivalent to cutting off some parameters, thereby reducing transmission overheads. Model distillation means that a third-type model is obtained based on the second-type model, and a scale of the third-type model is less than a scale of the second-type model. It may be understood that the second-type model is a large-scale model, and the second-type model may correspond to a large quantity of parameters, while the third-type model is a small-scale model, and the third-type model may correspond to a small quantity of parameters. In this case, the access network device may send the third-type model in S304. This can also reduce transmission overheads. The UE may directly use the third-type model. It may be understood that the UE uses the third-type model as the second-type model. Model quantization means that if a parameter of the second-type model is, for example, a floating point number, the access network device may quantize the parameter of the second-type model. In S304, a parameter, sent by the access network device, of the second-type model may be a quantized parameter. This can also reduce transmission overheads.

Optionally, S305: The access network device determines a sounding codebook.

For example, the access network device maintains one or more sounding codebooks, and the one or more sounding codebooks may be set by the access network device, or may be specified in a protocol. If the access network device maintains a plurality of sounding codebooks, codewords included in the plurality of sounding codebooks may correspondingly differ in one or more of the following: a quantity of sounding beams, a beamwidth of a sounding beam, an angle range covered by a sounding beam, or a shape of a sounding beam. One sounding codebook may include one or more codewords, and each codeword may correspond to one beam.

In this disclosure, to cover directions of all possible channel paths by using a small quantity of sounding beams, a sounding beam corresponding to a codeword included in a sounding codebook may have a wide main lobe, and can cover a large range. Therefore, a sounding signal received by a UE may include as many direction angles as possible. In this case, characteristic information, determined by the UE, of a downlink channel may reflect information about paths in various directions in the downlink channel as fully as possible, so that the access network device can determine, based on the characteristic information of the downlink channel, codeword information that is aligned with a direction of a main path of the downlink channel as much as possible. In addition, because the main lobe of the sounding beam is wide, the access network device does not need to send excessive sounding signals. For example, a quantity of codewords included in the sounding codebook may be less than a second threshold. This can also reduce signaling overheads.

For example, before S305, the UE may further send status indication information to the access network device, and correspondingly, the access network device receives the status indication information from the UE. The status indication information may request (or indicate) to initiate a beam alignment process, or the status indication information may request (or indicate) to redetermine a downlink transmit beam (or redetermine downlink codeword information). For example, there already is a beam for communication between the UE and the access network device, and the UE and the access network device may perform normal communication by using the original beam. The original beam may be determined in a manner of this disclosure, or may be determined in another manner. In a communication process, if the UE considers that received signal strength is excessively low, for example, the UE determines that reference signal received power (reference signal received power, RSRP) or reference signal received quality (reference signal received quality, RSRQ) of a received signal is lower than a threshold a, the UE may send status indication information to the access network device, to request to redetermine a downlink transmit beam, thereby improving the received signal strength. For the solution in which the UE sends the status indication information, if the access network device receives the status indication information, S305 may be performed; or if the access network device does not receive the status indication information, S305 and a subsequent step may not be performed.

Alternatively, the UE may send request information instead of the status indication information to the access network device. The request information occupies, for example, one or more bits (bit). For example, the request information occupies 1 bit. If a value of the bit is "1 ", it indicates that a beam alignment process is requested (or indicated) to be initiated, or it indicates that a downlink transmit beam (or downlink codeword information) is requested (or indicated) to be redetermined. If the value of the bit is "0", it indicates that a beam alignment process does not need to be initiated, or it indicates that a downlink beam (or downlink codeword information) does not need to be redetermined. The content represented by 0 and 1 may be exchanged. Alternatively, regardless of a quantity of bits occupied by the request information, if the UE sends the request message to the access network device, it indicates that a beam alignment process is requested (or indicated) to be initiated, or it indicates that a downlink transmit beam (or downlink codeword information) is requested (or indicated) to be redetermined. If the UE does not send the request information, it indicates that a beam alignment process does not need to be initiated, or it indicates that a downlink beam (or downlink codeword information) does not need to be redetermined.

Alternatively, the UE may neither send the status indication information nor send the request information. In such a solution, the access network device may perform S305 based on a requirement of the access network device.

If the access network device maintains only one sounding codebook, the access network device may directly determine the sounding codebook, or it may be considered that S305 does not need to be performed in this case. Alternatively, if the access network device maintains a plurality of sounding codebooks, in S305, the access network device may determine one from the plurality of sounding codebooks. A manner in which the access network device determines one from the plurality of sounding codebooks is determining based on the status indication information. For example, the access network device may select, based on the status indication information from the plurality of sounding codebooks, a sounding codebook adapting to a current channel environment (that is, a downlink channel between the access network device and the UE). For example, the status indication information (or the request information) may further indicate or include one or more of the following: received signal strength information of the UE (for example, indicated by a parameter such as RSRP and/or RSRQ), location information of the UE, or motion status information of the UE. The motion status information of the UE includes, for example, a motion speed of the UE and/or a motion direction of the UE. For example, the status indication information (or the request information) includes motion status information of the UE, and the motion status information of the UE indicates that the UE is in a high-speed moving scenario. In this case, the access network device may select a sounding codebook with a wide beamwidth to resist mobility. For another example, the status indication information (or the request information) includes location information of the UE, and the location information of the UE indicates that the UE is in narrow space such as a subway station. In this case, the access network device may select a sounding codebook with a covered angle range concentrated in a specific area, to improve sending accuracy. For still another example, the status indication information (or the request information) includes received signal strength information of the UE, and the access network device determines, based on the received signal strength information of the UE and signal strength, stored in the access network device, of a historical transmit beam, that received signal strength of the UE is weak within a period of time, indicating that the UE may be far away from the access network device. In this case, the access network device may need to select a sounding codebook with a narrow beamwidth, to improve a beam gain and expand a coverage area of a sounding beam.

Alternatively, if the status indication information (or the request information) does not include or indicate the foregoing information, the access network device may determine one from the plurality of sounding codebooks in another manner. For example, the access network device may randomly select a sounding codebook, or the access network device may determine a sounding codebook based on a type, learned in advance, of the downlink channel between the access network device and the UE.

Optionally, S306: The access network device determines a first model, or in other words, the access network device determines a first model from the $M_1$ first-type models. In a possible method, $M_1=1$, and the first-type model is used as the first model. In a possible method, if $M_1=1$, the first-type model is used as the first model. If $M_1>1$, the access network device selects one from the plurality of first-type models as the first model.

The first model is a first-type model that matches the UE. For example, if the access network device obtains a plurality of first-type models, and different first-type models may apply to different channel types, the access network device may determine one from the plurality of first-type models as the first model based on the type of the downlink channel between the access network device and the UE.

Optionally, the access network device may determine, based on the status indication information (or the request information), a first-type model applying to the UE. For example, the access network device receives the status indication information (or the request information) from the UE, and may determine, based on the status indication information (or the request information), the type of the downlink channel between the UE and the access network device, so that the first model that matches the type can be determined. Alternatively, the access network device may determine, in another manner, the first model applying to the UE. For example, the access network device determines, based on an identity number (ID) of the UE, the first model applying to the UE.

S305 and S306 may occur at the same time, or S305 may occur before S306, or S305 may occur after S306.

Optionally, S307: The access network device sends first indication information to the UE. Correspondingly, the UE receives the first indication information from the access network device.

The first indication information indicates, for example, a third model. For example, the access network device has sent the information about the $M_1$ second-type models to the UE, and each second-type model may correspond to one index. The third model is one of the $M_1$ second-type models. In this case, the first indication information may include an index of the third model, so that the third model can be indicated by using the index of the third model, and the UE can determine the third model from the $M_1$ second-type models based on the index included in the first indication information. The access network device selects the first model. For example, the third model corresponds to the first model. Therefore, the access network device and the UE can use a corresponding pair of models. Alternatively, S304 may not be performed. In this case, the first indication information may include information about the third model, to indicate the third model by including the information about the third model. The information about the third model includes, for example, one or more of a structure of the third model, a parameter of the third model, or an index of the third model in the $M_1$ second-type models. It is equivalent to that the access network device does not need to send the information about the $M_1$ second-type models to the UE in advance, but after determining the third model to be used by the UE, sends the information about the third model to the UE. This can reduce signaling overheads caused by sending models. Alternatively, S304 may not be performed, and several second-type models and an index uniquely corresponding to each second-type model may be predefined in a protocol. For example, some or all second-type models predefined in the protocol are set in the UE before delivery, and these second-type models include the third model. In this case, the access network device may directly send an index of the third model to the UE, that is, send the first indication information to the UE, and the UE may use the third model corresponding to the index. The access network device does not need to send information such as a specific structure and parameter of the third model to the UE, thereby reducing signaling overheads.

However, when the UE requests to initiate a beam alignment process, it may indicate that received signal strength of the UE is poor. If the information about the third model is sent in this case, a success rate of the sending may be low. Therefore, when the access network device sends information about one or more third-type models to the UE in advance in S304, a success rate of model sending can be improved. Therefore, the solutions of sending a third-type model in advance and not sending a third-type model in advance have respective advantages and disadvantages, and may be flexibly selected for application.

Optionally, the first indication information may further indicate or include information about a sounding codebook used by the access network device. The information about the sounding codebook includes, for example, a quantity of codewords included in the sounding codebook, or may further include other information.

Optionally, S308: The access network device sends a sounding signal to the UE based on the sounding codebook. Correspondingly, the UE receives the sounding signal from the access network device.

The sounding codebook selected by the access network device may include one or more codewords, and the access network device may send a sounding signal based on some or all codewords included in the sounding codebook. One codeword corresponds to one transmit beam, and the codeword is used to precode a sounding signal. Therefore, a beam used when the sounding signal is sent is the transmit beam corresponding to the codeword. The transmit beam may also be referred to as a sounding beam. The access network device may send one sounding signal by using one sounding beam. In S308, the access network device may send a sounding signal based on some or all codewords included in the sounding codebook. Therefore, the access network device may send one or more sounding signals. For example, the access network device may determine K codewords based on the sounding codebook. Because a codeword included in the sounding codebook is used to send a sounding signal, the K codewords may also be referred to as sounding signal codewords. For example, the K sounding signal codewords are included in the sounding codebook, the K sounding signal codewords are some or all codewords included in the sounding codebook, and K is a positive integer, that is, a quantity of codewords included in the sounding codebook is greater than or equal to K. One sounding signal codeword is used to send one sounding signal (which may be understood as that one sounding signal codeword may be used to precode one sounding signal), so that the access network device may send K sounding signals to the UE based on the K sounding signal codewords.

Optionally, S309: The UE obtains first characteristic information based on information about the K sounding signals. The first characteristic information is characteristic information of the downlink channel between the UE and the access network device. Optionally, the UE may obtain the first characteristic information based on the information about the K sounding signals and the third model. In this disclosure, for example, the UE obtains the first characteristic information based on the information about the K sounding signals and the third model (which is also used as an example in FIG. 3).

After receiving the K sounding signals, the UE may preprocess the K sounding signals, and input a preprocessing result into the third model. The access network device may send the K sounding signals at the same time (for example, within a same time unit). Alternatively, the access network device may not send the K sounding signals at the same time (for example, not within a same time unit), but send the K sounding signals at different time.

For sending at different time, each time the UE receives a sounding signal, the UE may first store the sounding signal, that is, the UE may store K sounding signals that are consecutive in time. For example, the access network device sends a sounding signal based on each codeword in the sounding codebook, that is, the K sounding signal codewords are all codewords included in the sounding codebook, and the first indication information includes the quantity of codewords included in the sounding codebook. In this case, the UE may determine a value of K, so that the UE can determine whether all the K sounding signals are received. After receiving all the K sounding signals, the UE may preprocess the K sounding signals together to obtain a preprocessing result, so that the UE may input the preprocessing result into the third model, and the third model may output the characteristic information of the downlink channel.

Alternatively, for sending at different time, each time the UE receives a sounding signal, the UE may preprocess the sounding signal to obtain a preprocessing result. After obtaining preprocessing results (that is, K preprocessing results) of the K sounding signals, the UE may input the K preprocessing results into the third model, and the third model may output the characteristic information of the downlink channel.

For example, an $i^{th}$ sounding signal received by the UE may be represented as follows:

$$y_i = V * H * W_i * x_i + V * n \quad (\text{Formula } 1)$$

$y_i$ represents the $i^{th}$ sounding signal received by the UE, $W_i$ represents an $i^{th}$ sounding signal codeword (that is, a precoding matrix), $x_i$ represents an $i^{th}$ sounding signal sent by the access network device, and H represents a downlink channel matrix between the access network device and the UE. V represents a receive matrix on a UE side. The receive matrix on the UE side may be understood as a receive precoding matrix of the UE. The receive matrix may be a unit matrix or a matrix of another type, and each receive matrix may correspond to one receive beam. n represents additive white Gaussian noise of the UE. For example, the UE preprocesses the K sounding signals. For example, the preprocessing process includes: The UE splices information about the received K consecutive sounding signals. A splicing result is represented as $y = [y_1, y_2, ... y_K]$. The UE separates a real part and an imaginary part of $y$ to obtain $\tilde{y} = [Re(y), Im(y)]$. $Re(y)$ represents taking the real part, and $Im(y)$ represents taking the imaginary part. $\tilde{y}$ may be used as input information of the third model. Based on the foregoing description, output information of the third model may be represented as $z = [z_1, z_2, ... , z_M]$, $z$ is characteristic information of the downlink channel, and M is an output dimension of the third model.

As described above, during training of the second-type model, training may be performed based on a corresponding training dataset, or training may be performed based on a training dataset and assistance information of the UE. Optionally, if the second-type model is obtained through training based on the training dataset and the assistance information of the UE, after obtaining information about the sounding signal (for example, a preprocessing result of the sounding signal), in addition to the information about the sounding signal, the UE may further input obtained assistance information of the UE into the second-type model (for example, the third model). The assistance information of the UE helps the second-type model to obtain more accurate characteristic information of the downlink channel.

For example, for a representation form of the i$^{th}$ sounding signal received by the UE, refer to Formula 1. The assistance information of the UE obtained by the UE is represented as, for example, $s = [s_1, s_2, ..., s_p]$. For example, the UE preprocesses the K sounding signals. For the preprocessing process, refer to the foregoing description. $\tilde{y}$ is obtained after preprocessing. In this case, $[\tilde{y}, s]$ may be used as input information of the third model, and output information of the third model may be represented as $z = [z_1, z_2, ..., z_M]$. $z$ is characteristic information of the downlink channel. $z$ obtained herein may be the same as or different from the foregoing $z$ obtained when the assistance information is not considered. Herein, because the assistance information is considered, $z$ can more truly reflect a characteristic of the downlink channel.

For example, when the assistance information of the UE is not considered, for a representation form of the i$^{th}$ sounding signal received by the UE, refer to Formula 1. For example, the UE preprocesses the K sounding signals. For example, the preprocessing process includes: The UE splices information about the received K consecutive sounding signals. A splicing result is represented as

$$y = [y_1^T, y_2^T, ... y_K^T]^T \quad y_i^T$$

represents transposition of $y_i$. The UE separates a real part and an imaginary part of $y$ to obtain $\tilde{y} = [Re(y), Im(y)]$. $Re(y)$ represents taking the real part, and $Im(y)$ represents taking the imaginary part. In this case, $\tilde{y}$ may be used as input information of the third model, and output information of the third model is information about a first codeword. The information that is output by the third model and that is about the first codeword may be implemented in a plurality of forms. For example, the first codeword information output by the third model is $z = [z_{re}, z_{im}]$, and $z_{re} = [z_{re_1}, z_{re_2}, ..., z_{re_F}]$. $z_{re}$ represents a real part of the output first codeword, $z_{im}$ represents an imaginary part of the output first codeword, and F represents a quantity of antennas of the access network device. For another example, the information that is output by the third model and that is about the first codeword is $\theta = [\theta_1, \theta_2, ... , \theta_F]$. $\theta$ represents phase information for forming a complex codeword (the first codeword corresponding to the first codeword information is a complex codeword), and F represents a quantity of antennas of the access network device.

For another example, when the assistance information of the UE is considered, for a representation form of the i$^{th}$ sounding signal received by the UE, refer to Formula 1. For example, the UE preprocesses the K sounding signals. For the preprocessing process, refer to the description in the foregoing paragraph. $\tilde{y}$ is obtained after preprocessing. For example, the assistance information of the UE obtained by the UE is represented as $s = [s_1, s_2, ..., s_P]$. In this case, $[\tilde{y}, s]$ may be used as input information of the third model, and output information of the third model is information about a first codeword. The information that is output by the third model and that is about the first codeword may be implemented in a plurality of forms. For example, the information that is output by the third model and that is about the first codeword is W = $[w_{re}, w_{im}]$. $w_{re} = [w_{re_1}, w_{re_2}, ..., w_{re_F}]$, and $w_{im} = [w_{im_1}, w_{im_2}, ..., w_{im_F}]$. $w_{re}$ represents a real part of the output first codeword, $w_{im}$ represents an imaginary part of the output first codeword, and F represents a quantity of antennas of the access network device. For another example, the information that is output by the third model and that is about the first codeword is $\theta = [\theta_1, \theta_2, ... , \theta_F]$. $\theta$ represents phase information for forming a complex codeword (the first codeword corresponding to the first codeword information is a complex codeword), and F represents a quantity of antennas of the access network device.

S310: The UE sends the first characteristic information to the access network device. Correspondingly, the access network device receives the first characteristic information from the UE.

If S309 is replaced with that the UE obtains the information about the first codeword, S310 may be correspondingly replaced with that the UE sends, to the access network device, the information about the first codeword or information indicating the information about the first codeword. Correspondingly, the access network device receives, from the UE, the information about the first codeword or receives the information indicating the information about the first codeword.

S311: The access network device obtains information about a first codeword based on the first characteristic information. The first codeword corresponding to the information about the first codeword may be used to precode downlink data to be sent to the UE. Optionally, in this disclosure, information about a codeword may also be referred to as codeword information. For example, the information about the first codeword may be referred to as first codeword information.

Optionally, the access network device may obtain the first codeword information based on the first characteristic information and the first model. For example, the access network device may input the first characteristic information into the first model, and the first model outputs the first codeword information. Alternatively, the access network device may preprocess the first characteristic information, and input a preprocessing result into the first model, and the first model outputs the first codeword information.

Alternatively, the access network device may obtain the first codeword information in another manner without the first model. In this disclosure, for example, the access network device obtains the first codeword information based on the first characteristic information and the first model (which is also used as an example in FIG. 3).

For example, the characteristic information, received by the access network device, of the downlink channel is represented as $z = [z_1, z_2, ... , z_M]$. The access network device may use z as input information of the first model, and the first model may output the first codeword information. The first codeword information output by the first model may be implemented in a plurality of forms. For example, the first codeword information output by the first model is $W = [w_{re}, w_{im}]$. $w_{re} = [w_{re_1}, w_{re_2}, ..., w_{re_F}]$, and $w_{im} = [w_{im_1}, w_{im_2}, ..., w_{im_F}]$. $w_{re}$ represents a real part of the output first codeword, $w_{im}$ represents an imaginary part of the output first codeword, and F represents a quantity of antennas of the access network device. For another example, the first codeword information output by the first model is $\theta = [\theta_1, \theta_2, ... , \theta_F]$. $\theta$ represents phase information for forming a complex codeword (the first codeword corresponding to the first codeword information is a complex codeword), or in other words, $\theta$ represents phase information for which an antenna phase shifter of the access network device needs to be adjusted when the access network device sends downlink information by using the first codeword information, and F represents a quantity of antennas of the access network device.

If S310 is that the UE sends the first codeword information to the access network device, S311 may not be performed.

The characteristic information, fed back by the UE, of the downlink channel is determined based on the K sounding signals sent by the access network device, and the K sounding beams may cover a wide direction angle. Therefore, the characteristic information of the downlink channel can fully reflect information about a main path of the downlink channel at each direction angle. Optionally, if the first model and the third model need to be used in a solution of this disclosure, the first model and the third model may be jointly trained. Therefore, the first model can interpret the characteristic information, fed back by the UE, of the downlink channel, and can design corresponding first codeword information for channel path information (for example, a quantity of main paths and/or an angle of a main path) included in the characteristic information of the downlink channel, so that a transmit beam corresponding to the first codeword information can adapt to an actual channel environment.

Optionally, S312: The access network device sends precoded data to the UE. Correspondingly, the UE receives the precoded data from the access network device.

For example, downlink data to be sent by the access network device to the UE is first downlink data. The access network device precodes the first downlink data by using the first codeword to obtain precoded data, and the access network device may send the precoded data to the UE.

Optionally, if the first codeword information output by the first model includes a real part and an imaginary part of the first codeword, the access network device may combine the real part and the imaginary part into a complete complex codeword, that is, a complete first codeword. For example, the first codeword obtained through combination is represented as $W_c = w_{re} + j * w_{im}$. The access network device may calculate phase information $\theta = [\theta_1, \theta_2, ... , \theta_F]$ of the complex codeword, and adjust a phase of a corresponding antenna phase shifter based on $\theta$, to complete precoding. Alternatively, if the first codeword information output by the first model includes the phase information $\theta = [\theta_1, \theta_2, ... , \theta_F]$ corresponding to the first codeword, the access network device may directly adjust the phase of the corresponding antenna phase shifter based on $\theta$, to complete precoding.

In this disclosure, the UE may perform receiving by using an omnidirectional antenna or a directional antenna. For precoded data received from the access network device by using the omnidirectional antenna or the directional antenna, the UE may combine the precoded data from the access network device by using a fixed codeword (or in other words, a fixed receive precoding matrix). Alternatively, if the UE has a plurality of receive precoding matrices (or in other words, a plurality of receive beams, where one receive precoding matrix corresponds to one receive beam), the UE may notify the access network device to send the precoded data a plurality of times, and the UE receives the precoded data from the access network device by using the plurality of receive precoding matrices respectively. For example, the UE may use different receive precoding matrices to weight a plurality of pieces of received precoded data, and then combine a plurality of pieces of weighted precoded data, to obtain final received data.

Alternatively, if the UE has a plurality of receive beams, the access network device may send the precoded data a plurality of times, and the UE may receive the precoded data by using the plurality of receive beams respectively, to determine a receive beam with best received signal strength, and subsequently receive data from the access network device by using the receive beam. Alternatively, the UE may determine a receive beam (or in other words, determine codeword information used for receiving) in another manner. This is not limited in this disclosure.

S301 to S309 and S312 are all optional steps.

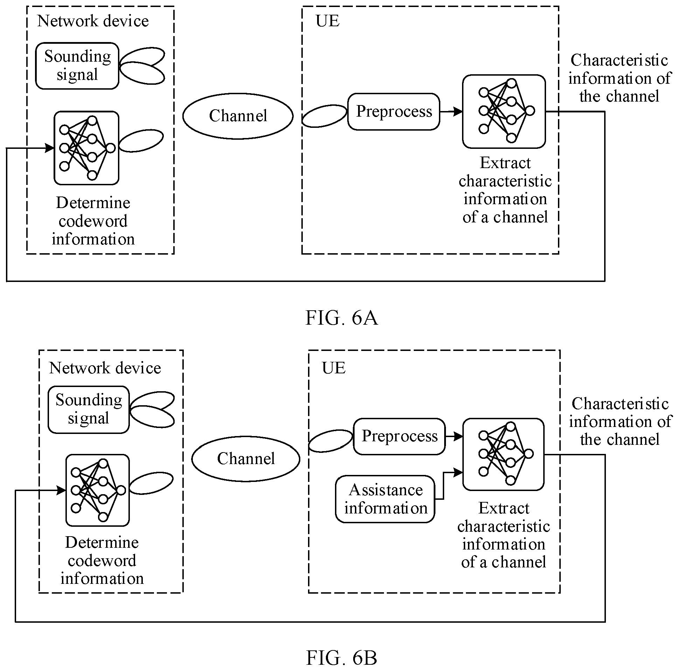

FIG. 6A is a schematic diagram of a technical solution according to this disclosure. That is, an access network device sends a sounding signal through a sounding beam, and the sounding signal is sent to a UE through a downlink channel. The UE preprocesses information about the received sounding signal, and inputs a preprocessing result into a third model. Characteristic information of the downlink channel is extracted based on the third model. The UE sends the characteristic information of the downlink channel to the access network device, and then the access network device inputs the characteristic information of the downlink channel into a first model (or the access network device preprocesses the characteristic information of the downlink channel, and then inputs a preprocessing result into the first model), to obtain information that is output by the first model and that is about a codeword (for example, information about a first codeword). The access network device uses the codeword corresponding to the information about the codeword to precode first downlink data to be sent to the UE, to obtain precoded data, and the access network device sends the precoded data to the UE through the downlink channel.

FIG. 6B is another schematic diagram of a technical solution according to this disclosure. A difference between FIG. 6B and FIG. 6A is that, the UE inputs assistance information of the UE into the third model, in addition to the information about the received sounding signal. In addition, in FIG. 6A and/or FIG. 6B, the codeword information determined by the access network device may be used to send a sounding signal, or may be used to send data.

In this disclosure, a codeword does not need to be selected from a fixed codebook, but instead, the codeword information may be generated based on the characteristic information, fed back by the UE, of the downlink channel. The characteristic information, fed back by the UE, of the downlink channel can accord with a current communication scenario, so that a transmit beam corresponding to the first codeword information generated based on the characteristic information can adapt to the current communication scenario. That is, in different communication scenarios, codeword information applying to the scenarios can be obtained based on characteristic information, fed back by a UE, of a downlink channel. The codeword information corresponds to, for example, a beam. According to the method provided in this disclosure, a beam that matches a communication scenario can be obtained, thereby improving communication performance. In addition, in this disclosure, a plurality of beam scanning processes based on a fixed codebook do not need to be performed, so that air interface overheads can be reduced. In addition, the characteristic information, fed back by the UE, of the downlink channel can truly express a characteristic of the downlink channel between the access network device and the terminal device, so that the beam corresponding to the codeword information obtained based on the characteristic information of the downlink channel can be aligned with a direction of a main path of the downlink channel as much as possible, thereby improving a penetration capability of a signal sent by using the transmit beam, reducing path fading, increasing a propagation distance of the signal, and improving a coverage capability of the signal.

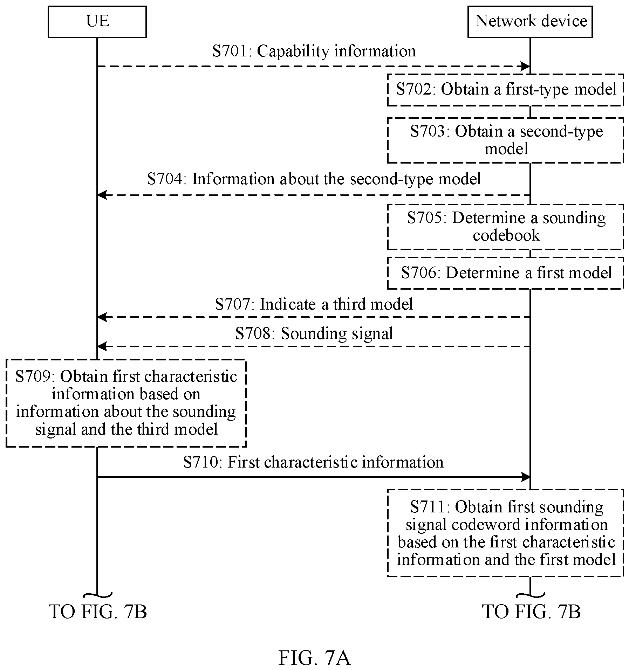

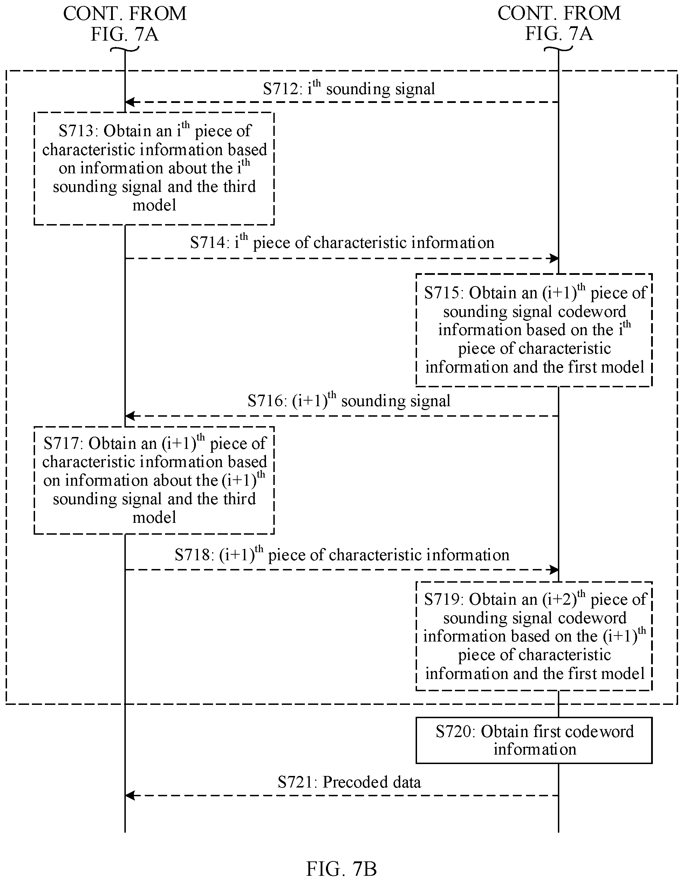

In the embodiment shown in FIG. 3, an access network device determines sounding signal codeword information based on a sounding codebook. The following describes a second communication method provided in this disclosure. In this method, in addition to determining sounding signal codeword information based on a sounding codebook, the access network device may determine sounding signal codeword information based on a first-type model, and finally determine, through continuous iteration, codeword information used to send data. In this way, the codeword information used to send data has better adaptability to a channel environment. FIG. 7A and FIG. 7B are a flowchart of the method.

Optionally, S701: A UE sends capability information to an access network device. Correspondingly, the access network device receives the capability information from the UE. The capability information may indicate some capabilities or all capabilities of the UE.

For more content of S701, refer to S301 in the embodiment shown in FIG. 3.

Optionally, S702: The access network device obtains a first-type model.

For more content of S702, refer to S302 in the embodiment shown in FIG. 3.

Optionally, S703: The access network device obtains a second-type model.

For more content of S703, refer to S303 in the embodiment shown in FIG. 3.

Optionally, S704: The access network device sends information about the second-type model to the UE. Correspondingly, the UE receives the information about the second-type model from the access network device.

For more content of S704, refer to S304 in the embodiment shown in FIG. 3.

Optionally, S705: The access network device determines a sounding codebook.

For more content of S705, refer to S305 in the embodiment shown in FIG. 3.

Optionally, S706: The access network device determines a first model, or in other words, the access network device determines a first model from $M_1$ first-type models.

For more content of S706, refer to S306 in the embodiment shown in FIG. 3.

Optionally, S707: The access network device sends first indication information to the UE. Correspondingly, the UE receives the first indication information from the access network device.

Optionally, S708: The access network device sends a sounding signal to the UE. Correspondingly, the UE receives the sounding signal from the access network device.

For example, the access network device may send K sounding signals to the UE based on K sounding signal codewords. For more content related thereto, refer to S308 in the embodiment shown in FIG. 3.

Alternatively, in S708, the access network device may send a sounding signal to the UE based on an initial sounding signal codeword. Correspondingly, the UE receives the sounding signal from the access network device. This may be understood as that the access network device sends one sounding signal to the UE, and the sounding signal is understood as, for example, a $0^{th}$ sounding signal. The initial sounding signal codeword is, for example, a codeword in the sounding codebook, or the initial sounding signal codeword may be a codeword preconfigured by the access network device, or the initial sounding signal codeword may be a codeword predefined in a protocol. In addition, the "initial sounding signal codeword" merely indicates that the access network device may start to send a sounding signal to the UE by using the codeword, and the codeword may alternatively have another name.

Optionally, S709: The UE obtains first characteristic information based on information about the sounding signal. The first characteristic information is characteristic information of a downlink channel between the UE and the access network device.

For more content of S709, refer to S309 in the embodiment shown in FIG. 3. In this case, S709 may be understood as that the UE obtains the first characteristic information based on information about the K sounding signals. Optionally, S709 may be understood as that the UE obtains the first characteristic information based on the information about the K sounding signals and a third model.

Alternatively, if the UE receives the $0^{th}$ sounding signal in S708, S709 may be understood as that the UE obtains the first characteristic information based on information about the $0^{th}$ sounding signal. Optionally, S709 may be understood as that the UE obtains the first characteristic information based on the information about the $0^{th}$ sounding signal and the third model.

S710: The UE sends the first characteristic information to the access network device. Correspondingly, the access network device receives the first characteristic information from the UE.

For more content of S710, refer to S310 in the embodiment shown in FIG. 3.

Optionally, S711: The access network device obtains first sounding signal codeword information based on the first characteristic information. Optionally, the access network device may obtain information about a first sounding signal codeword based on the first characteristic information and the first model.

For more content of S711, refer to S311 in the embodiment shown in FIG. 3.

Next, the access network device and the UE may obtain an $N^{th}$ piece of sounding signal codeword information based on a first operation and a second operation. For example, the $N^{th}$ piece of sounding signal codeword information is first codeword information. The first operation may include: The access network device sends an $i^{th}$ sounding signal to the UE. The UE obtains an $i^{th}$ piece of characteristic information of the downlink channel based on information about the $i^{th}$ sounding signal. The UE sends the $i^{th}$ piece of characteristic information of the downlink channel to the access network device. The access network device obtains an $(i+1)^{th}$ piece of sounding signal codeword information based on the $i^{th}$ piece of characteristic information of the downlink channel. The second operation may include: The access network device sends an $(i+1)^{th}$ sounding signal to the UE based on the $(i+1)^{th}$ piece of sounding signal codeword information, and then returns to the first operation. i is an integer from 1 to N. The $i^{th}$ piece of sounding signal codeword information is one piece of sounding signal codeword information, and is referred to as the "$i^{th}$ piece" because a plurality of pieces of sounding signal codeword information may be obtained based on the first model, and the pieces of sounding signal codeword information are numbered in a sequence of obtaining the sounding signal codeword information, to distinguish between the plurality of pieces of sounding signal codeword information. That is, the access network device performs an iterative process, and may obtain the $N^{th}$ piece of sounding signal codeword information through a plurality of iterations. For ease of understanding, the following describes the iterative process by using S712 to S719.

S712: The access network device sends an $i^{th}$ sounding signal to the UE based on an $i^{th}$ sounding signal codeword. Correspondingly, the UE receives the $i^{th}$ sounding signal from the access network device. For example, i=1, and the $i^{th}$ sounding signal codeword is, for example, a sounding signal codeword corresponding to the first sounding signal codeword information in S711. For example, the access network device precodes the $i^{th}$ sounding signal based on the $i^{th}$ sounding signal codeword, and sends a precoded $i^{th}$ sounding signal to the UE through the downlink channel between the access network device and the UE.

Optionally, S713: The UE obtains an $i^{th}$ piece of characteristic information based on information about the $i^{th}$ sounding signal. Optionally, the UE may obtain the $i^{th}$ piece of characteristic information based on the information about the $i^{th}$ sounding signal and a fourth model. The $i^{th}$ piece of characteristic information is characteristic information of the downlink channel between the UE and the access network device.

The fourth model is a model in second-type models. Similar to the indication method for the third model, the access network device may indicate the fourth model to the UE by using indication information.

The fourth model and the third model may be a same model. For example, in S708, the access network device sends the $0^{th}$ sounding signal to the UE, and the UE obtains the first characteristic information based on the $0^{th}$ sounding signal and the third model in S709. In this case, an input dimension of the third model is a dimension of one sounding signal, an input dimension of the fourth model is also the dimension of one sounding signal, input dimensions of the two models are the same and output dimensions of the two models are also the same. Therefore, the third model and the fourth model may be a same model. Certainly, even in this case, the third model and the fourth model may be different models. That is, if the input dimension and the output dimension of the third model is respectively the same as the input dimension and the output dimension of the fourth model, the two models may be a same model, or may be different models.

Alternatively, the fourth model and the third model may be different models. For example, in S708, the access network device sends the K sounding signals to the UE, and the UE obtains the first characteristic information based on the K sounding signals and the third model in S709. If K is greater than 1, an input dimension of the third model is a dimension of a plurality of sounding signals, while an input dimension of the fourth model is a dimension of one sounding signal. Input dimensions of the two models may be different. For example, if the dimension of one sounding signal is T, a dimension of K sounding signals is $K \times T$, that is, the input dimension of the third model is $K \times T$, and the input dimension of the fourth model is T. Therefore, in this case, the third model and the fourth model are different models, but an output dimension of the third model is the same as an output dimension of the fourth model.

If the third model and the fourth model are different models, the fourth model may also be one of $M_1$ second-type models. For example, in addition to the third model, the first indication information sent by the access network device in S707 may indicate the fourth model. For another example, the access network device may further send second indication information to the UE, and the second indication information may indicate the fourth model. An indication manner of the access network device for the fourth model is similar to the indication manner for the third model. For details, refer to S307 in the embodiment shown in FIG. 3. If the third model and the fourth model have a same input dimension, it is equivalent to that the access network device indicates, to the UE, two second-type models with the same dimension, and the UE may randomly select one as the third model, and use the other as the fourth model. If the third model and the fourth model have different input dimensions, it is equivalent to that the access network device indicates, to the UE, two second-type models with different input dimensions. In this case, the UE may select a model with a high input dimension as the third model, and use a model with a low input dimension as the fourth model. Alternatively, the access network device separately indicates the third model and the fourth model, and the UE uses, based on the indication of the base station, a model indicated as the third model as the third model (for example, the model is indicated as the third model by using information A or a flag bit A), and uses a model indicated as the fourth model as the fourth model (for example, the model is indicated as the fourth model by using information B or a flag bit B).

For more content of S713, refer to S309 in the embodiment shown in FIG. 3.

Optionally, S714: The UE sends the $i^{th}$ piece of characteristic information to the access network device. Correspondingly, the access network device receives the $i^{th}$ piece of characteristic information from the UE.

Optionally, S715: The access network device obtains an $(i+1)^{th}$ piece of sounding signal codeword information based on the $i^{th}$ piece of characteristic information. A codeword corresponding to the $(i+1)^{th}$ piece of sounding signal codeword information may be used to precode a sounding signal to be sent to the UE. Optionally, the access network device may obtain the $(i+1)^{th}$ piece of sounding signal codeword information based on the $i^{th}$ piece of characteristic information and the first model.

For more content of S715, refer to S311 in the embodiment shown in FIG. 3.

Optionally, S716: The access network device sends an $(i+1)^{th}$ sounding signal to the UE based on the $(i+1)^{th}$ piece of sounding signal codeword information. Correspondingly, the UE receives the $(i+1)^{th}$ sounding signal from the access network device. For example, the access network device precodes the $(i+1)^{th}$ sounding signal based on the $(i+1)^{th}$ piece of sounding signal codeword information, and sends a precoded $(i+1)^{th}$ sounding signal to the UE through the downlink channel between the access network device and the UE.

Optionally, S717: The UE obtains an $(i+1)^{th}$ piece of characteristic information of the downlink channel based on information about the $(i+1)^{th}$ sounding signal. Optionally, the UE may obtain the $(i+1)^{th}$ piece of characteristic information based on the information about the $(i+1)^{th}$ sounding signal and the fourth model. The downlink channel is a downlink channel between the UE and the access network device.

For more content of S717, refer to S309 in the embodiment shown in FIG. 3.

Optionally, S718: The UE sends the $(i+1)^{th}$ piece of characteristic information of the downlink channel to the access network device. Correspondingly, the access network device receives, from the UE, the $(i+1)^{th}$ piece of characteristic information of the downlink channel.

Optionally, S719: The access network device may obtain an $(i+2)^{th}$ piece of sounding signal codeword information based on the $(i+1)^{th}$ piece of characteristic information. Optionally, the access network device may obtain the $(i+2)^{th}$ piece of sounding signal codeword information based on the $(i+1)^{th}$ piece of characteristic information and the first model. After S719, S712 may be performed again.

In this disclosure, after sending the K sounding signals based on the sounding codebook (or sending the $0^{th}$ sounding signal to the UE), and receiving the first characteristic information returned by the UE, the access network device does not directly determine, based on the first characteristic information, codeword information used to send data, but continues to send a sounding signal based on the codeword information determined based on the first characteristic information. After receiving the sounding signal, the UE continues to extract characteristic information of the downlink channel, and sends the characteristic information of the downlink channel to the access network device. After receiving the characteristic information of the downlink channel from the UE, the access network device continues to determine codeword information based on the characteristic information of the downlink channel, and sends a sounding signal based on the codeword information; and so on. This is equivalent to an iterative process. A sounding beam corresponding to each piece of sounding signal codeword information newly determined by the access network device is determined based on characteristic information, fed back by the UE, of the downlink channel, so that a direction of the sounding beam is likely to include a direction of a main path of the downlink channel or a direction in which energy is concentrated. Therefore, a beamwidth of the sounding beam newly determined by the access network device may be narrower than a width of a beam corresponding to each codeword included in the sounding codebook, and directionality is better. If the access network device and the UE repeatedly perform the foregoing iterative steps (for example, S712 to S719), an optimized sounding beam may become narrower, or a plurality of wave peaks included in a single sounding beam may point to directions of main paths in the downlink channel, so that the optimized sounding beam can better match a transmission characteristic of the downlink channel.

For example, after N iterations, the access network device determines that obtained codeword information is converged. For example, N is not a fixed value, but is determined by a channel environment. For example, when a quantity of paths of the downlink channel is small and a main path is very strong, a few iterations may be performed to complete the process, that is, N may be small. Alternatively, N may be a fixed value set by the access network device, or N may be specified in a protocol.

S720: The access network device obtains first codeword information. If the access network device obtains the first codeword information, the iterative process stops.

For example, the access network device receives an $(N-1)^{th}$ piece of characteristic information of the downlink channel from the UE, and the access network device determines an $N^{th}$ piece of sounding signal codeword information based on the $(N-1)^{th}$ piece of characteristic information. For a process in which the access network device determines the codeword information based on the characteristic information of the downlink channel, refer to S311 shown in FIG. 3.

For example, the access network device determines that the $N^{th}$ piece of sounding signal codeword information is converged, and therefore, the $N^{th}$ piece of sounding signal codeword information is the first codeword information. There may be a plurality of manners in which the access network device determines whether the $N^{th}$ piece of sounding signal codeword information is converged. For example, in a determining manner, the access network device determines a minimum mean square error between a weight of an $N^{th}$ sounding signal codeword and a weight of an $(N-1)^{th}$ sounding signal codeword. If the minimum mean square error is less than or equal to a first threshold, it indicates that the $N^{th}$ piece of sounding signal codeword information is converged. If the minimum mean square error is greater than the first threshold, it indicates that the $N^{th}$ piece of sounding signal codeword information is not converged. For example, in the iterative process, each time the access network device obtains a piece of sounding signal codeword information, the access network device may perform a determining process, to determine whether the sounding signal codeword information is converged, thereby accelerating convergence.

For another example, if N is a fixed value (for example, a value configured by the access network device, or a value specified in a protocol), after obtaining the $N^{th}$ piece of sounding signal codeword information, the access network device may determine that the $N^{th}$ piece of sounding signal codeword information is the first codeword information, and does not need to determine whether the $N^{th}$ piece of sounding signal codeword information is converged. In this case, the first codeword information may be converged codeword information, or may be non-converged codeword information.

If the access network device obtains the first codeword information, or the access network device determines that the iterative process stops, optionally, the access network device may send third indication information to the UE. The third indication information may indicate that the iterative process ends (or indicate that a sounding process ends), or indicate that a data transmission process starts. After receiving the third indication information, the UE may determine to start to perform a data transmission process.

Optionally, S721: The access network device sends precoded data to the UE. Correspondingly, the UE receives the precoded data from the access network device.

For example, downlink data to be sent by the access network device to the UE is first downlink data. The access network device precodes the first downlink data by using a first codeword to obtain precoded data, and the access network device may send the precoded data to the UE.

Similar to the foregoing description, in this disclosure, the UE may perform receiving by using a fixed receive beam, that is, the UE receives the precoded data from the access network device by using fixed codeword information. Alternatively, if the UE has a plurality of receive beams, the access network device may send the precoded data a plurality of times, and the UE may receive the precoded data by using the plurality of receive beams respectively, to determine a receive beam with best received signal strength, and subsequently receive data from the access network device by using the receive beam. Alternatively, the UE may determine a receive beam (or in other words, determine codeword information used for receiving) in another manner. This is not limited in this disclosure.

S701 to 709, S711 to S719, and S721 are all optional steps.

In this disclosure, a codeword does not need to be selected from a fixed codebook, but instead, codeword information may be generated based on characteristic information, fed back by a terminal device, of a downlink channel. The characteristic information, fed back by the terminal device, of the downlink channel can accord with a current communication scenario, so that a transmit beam corresponding to the codeword information generated based on the characteristic information can adapt to the current communication scenario. Therefore, in different communication scenarios, codeword information applying to the scenarios can be obtained based on characteristic information, fed back by a terminal device, of a downlink channel. The codeword information corresponds to, for example, a beam. According to the method provided in this disclosure, a beam that matches a communication scenario can be obtained, thereby improving communication performance. In addition, in this disclosure, a plurality of beam scanning processes based on a fixed codebook do not need to be performed, so that air interface overheads can be reduced. In addition, the characteristic information, fed back by the terminal device, of the downlink channel can truly express a characteristic of the downlink channel between the access network device and the terminal device, so that the beam corresponding to the codeword information obtained based on the characteristic information of the downlink channel can be aligned with a direction of a main path of the downlink channel as much as possible, thereby improving a penetration capability of a signal sent by using the transmit beam, reducing path fading, increasing a propagation distance of the signal, and improving a coverage capability of the signal. In addition, in this disclosure, a sounding beam is optimized in an iterative manner, and a lobe is gradually narrowed until converged into a final transmit beam. The transmit beam determined in this manner has stronger channel adaptability, and low air interface overheads can still be maintained.

In the foregoing design, the access network device may use the first model, and the UE may use the third model (or the third model and the fourth model). Optionally, alternatively, the access network device may not need to use the first model, and the UE may obtain codeword information based on the third model. After the UE sends the codeword information to the access network device, the access network device may precode, based on a codeword corresponding to the received codeword information, downlink data to be sent to the UE. In this manner, a processing process of the access network device is reduced, and load of the access network device can be reduced. In addition, in this manner, the codeword information fed back by the UE is determined based on a plurality of sounding signals sent by the access network device, and the plurality of sounding beams may cover a wide direction angle. Therefore, the codeword information may be designed for information about a channel path of the downlink channel (for example, a quantity of main paths and/or an angle of a main path), so that a transmit beam corresponding to the codeword information can adapt to an actual channel environment.

If this manner is used, for the content shown in FIG. 3, optionally, S301, S303 to S305, S307 to S310, and S312 may be performed, and S302, S306, and S311 do not need to be performed. That is, because the access network device does not need to use the first model, the access network device may not need to obtain the first-type models, or determine the first model from the first-type models. In addition, because the UE may obtain the codeword information, the access network device does not need to obtain the codeword information based on a corresponding model. In addition, in this manner, the first characteristic information in S309 and S310 may be replaced with the first codeword information, that is, the UE may obtain the first codeword information based on the information about the K sounding signals and the third model. A manner in which the UE obtains the first codeword information is similar to the manner in which the UE obtains the first characteristic information. For details, refer to the description of S309.

Alternatively, if this manner is used, for the content shown in FIG. 7A and FIG. 7B, optionally, S701, S703 to S705, S707 to S710, S712 to S714, S716 to S718, and S720 to S721 may be performed, and S702, S706, S711, S715, and S719 do not need to be performed. In addition, in this manner, the first characteristic information in S709 and S710 may be replaced with a $0^{th}$ piece of codeword information. A manner in which the UE obtains the $0^{th}$ piece of codeword information is similar to a manner in which the UE obtains the first characteristic information. For details, refer to the description of S709. The $i^{th}$ piece of characteristic information in S713 and S714 may be replaced with an $i^{th}$ piece of codeword information, and the $(i+1)^{th}$ piece of characteristic information in S717 and S718 may be replaced with an $(i+1)^{th}$ piece of codeword information. In addition, S720 may be replaced with that the UE obtains the first codeword information. The UE may obtain the $N^{th}$ piece of codeword information, and the UE may determine that the $N^{th}$ piece of codeword information is the first codeword information. For a manner in which the UE determines that the $N^{th}$ piece of codeword information is the first codeword information, refer to the manner in which the access network device determines that the $N^{th}$ piece of sounding signal codeword information is the first codeword information in the content shown in FIG. 7A and FIG. 7B.

Based on the foregoing method embodiments, a communication apparatus provided in this disclosure is described.

This disclosure provides a communication apparatus. The communication apparatus includes, for example, a processing unit and a transceiver unit (or referred to as a communication unit). The processing unit may be configured to implement a processing function of the UE in the embodiment shown in FIG. 3 or the embodiment shown in FIG. 7A and FIG. 7B, and the transceiver unit may be configured to implement all or some receiving and sending functions of the UE in the embodiment shown in FIG. 3 or the embodiment shown in FIG. 7A and FIG. 7B. Alternatively, the processing unit may be configured to implement a processing function implemented by the access network device in the embodiment shown in FIG. 3 or the embodiment shown in FIG. 7A and FIG. 7B, and the transceiver unit may be configured to implement all or some receiving and sending functions of the access network device in the embodiment shown in FIG. 3 or the embodiment shown in FIG. 7A and FIG. 7B.

Optionally, the processing unit and/or the transceiver unit may be implemented by using a virtual module. For example, the processing unit may be implemented by using a software functional unit or a virtual apparatus, and the transceiver unit may be implemented by using a software functional unit or a virtual apparatus. Alternatively, the processing unit and/or the transceiver unit may be implemented by using a physical apparatus (for example, a circuit system and/or a processor). The following describes a case in which the processing unit and the transceiver unit are implemented by using a physical apparatus.

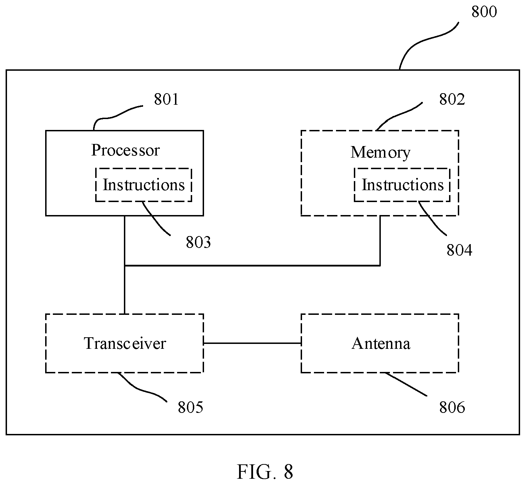

FIG. 8 is a schematic diagram of a structure of a communication apparatus according to this disclosure. The communication apparatus 800 may be the UE in the embodiment shown in FIG. 3 or the embodiment shown in FIG. 7A and FIG. 7B, a circuit system of the UE, a circuit system that can be applied to the UE, or the like, and is configured to implement the method corresponding to the UE in the foregoing method embodiment. Alternatively, the communication apparatus 800 may be the access network device in the embodiment shown in FIG. 3 or the embodiment shown in FIG. 7A and FIG. 7B, a circuit system of the access network device, a circuit system that can be applied to the access network device, or the like, and is configured to implement the method corresponding to the access network device in the foregoing method embodiment. For specific functions, refer to the descriptions in the foregoing method embodiment. For example, a circuit system is a chip system.

The communication apparatus 800 includes one or more processors 801. The processor 801 may implement a specific control function. The processor 801 may be a general-purpose processor, a dedicated processor, or the like, for example, including a baseband processor, a central processing unit, or the like. The baseband processor may be configured to process a communication protocol and communication data. The central processing unit may be configured to control the communication apparatus 800, execute a software program, and/or process data. Different processors may be independent components, or may be disposed in one or more processing circuits, for example, integrated into one or more application-specific integrated circuits.

Optionally, the communication apparatus 800 includes one or more memories 802, configured to store instructions 804. The instructions 804 may be run on the processor, so that the communication apparatus 800 performs the method described in the foregoing method embodiment. Optionally, the memory 802 may further store data. Optionally, the processor and the memory may be separately disposed, or may be integrated.

Optionally, the communication apparatus 800 may store instructions 803 (which sometimes may also be referred to as code or a program), and the instructions 803 may be run on the processor, so that the communication apparatus 800 performs the method described in the foregoing embodiment. The processor 801 may store data.

For example, the processing unit is implemented by using one or more processors 801, or the processing unit is implemented by using one or more processors 801 and one or more memories 802, or the processing unit is implemented by using one or more processors 801, one or more memories 802, and the instructions 803.

Optionally, the communication apparatus 800 may further include a transceiver 805 and an antenna 806. The transceiver 805 may be referred to as a transceiver unit, a transceiver, a transceiver circuit, a transceiver component, an input/output interface, or the like, and is configured to implement receiving and sending functions of the communication apparatus 800 via the antenna 806. For example, the transceiver unit is implemented by using the transceiver 805, or the transceiver unit is implemented by using the transceiver 805 and the antenna 806.

Optionally, the communication apparatus 800 may further include one or more of the following components: a wireless communication module, an audio module, an external memory interface, an internal memory, a universal serial bus (universal serial bus, USB) port, a power management unit, an antenna, a speaker, a microphone, an input/output module, a sensor module, a motor, a camera, a display, or the like. It may be understood that, in some embodiments, the communication apparatus 800 may include more or fewer components, or some components are integrated, or some components are split. These components may be implemented by hardware, software, or a combination of software and hardware.

The processor 801 and the transceiver 805 described in this disclosure may be implemented on an integrated circuit (integrated circuit, IC), an analog IC, a radio frequency integrated circuit (radio frequency identification, RFID), a mixed signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a larger device (for example, a module that may be embedded in another device). For details, refer to descriptions of the UE and the access network device in the foregoing embodiments. Details are not described herein again.

This disclosure provides a terminal device. The terminal device may be used in the foregoing embodiments. The terminal device includes corresponding means (means), units, and/or circuits for implementing functions of the UE in the embodiment shown in FIG. 3 or the embodiment shown in FIG. 7A and FIG. 7B. For example, the terminal device includes a transceiver module (or referred to as a transceiver unit) configured to support the terminal device in implementing receiving and sending functions, and a processing module (or referred to as a processing unit) configured to support the terminal device in processing a signal.

All or some of the technical solutions provided in this disclosure may be implemented by using software, hardware, firmware, or any combination thereof. When software is used for implementation, all or some may be implemented in a form of a computer program product. The computer program product includes one or more computer instructions. When the computer program instructions are loaded and executed on a computer, all or some of the procedure or functions according to this disclosure are generated. The computer may be a general-purpose computer, a special-purpose computer, a computer network, an access network device, a terminal device, an AI node, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

**Claims**

1. A communication method, comprising:

   receiving characteristic information of a downlink channel from a terminal device; and
   obtaining first codeword information based on the characteristic information of the downlink channel and a first model, wherein input of the first model comprises the characteristic information of the downlink channel, output of the first model comprises the first codeword information, and a first codeword corresponding to the first codeword information is used for precoding.

2. The method according to claim 1, wherein the method further comprises:

   precoding first downlink data based on the first codeword, to obtain precoded data; and
   sending the precoded data to the terminal device.

3. The method according to claim 1 or 2, wherein the method further comprises:
   sending K sounding signals to the terminal device based on K sounding signal codewords, wherein one sounding signal codeword is used to send one sounding signal.

4. The method according to claim 1 or 2, wherein the method further comprises:

   obtaining an $N^{th}$ piece of sounding signal codeword information based on a first operation and a second operation, and determining the $N^{th}$ piece of sounding signal codeword information as the first codeword information, wherein the first operation comprises: receiving an $i^{th}$ piece of characteristic information of the downlink channel from the terminal device, and obtaining an $(i+1)^{th}$ piece of sounding signal codeword information based on the $i^{th}$ piece of characteristic information of the downlink channel; the second operation comprises: sending an $(i+1)^{th}$ sounding signal to the terminal device based on the $(i+1)^{th}$ piece of sounding signal codeword information, and returning to the first operation; and i is an integer from 1 to N.

5. The method according to claim 4, wherein a minimum mean square error between a weight of the $N^{th}$ piece of sounding signal codeword information and a weight of an $(N-1)^{th}$ piece of sounding signal codeword information is less than or equal to a first threshold.

6. The method according to claim 4 or 5, wherein before the receiving a first piece of characteristic information of the downlink channel from the terminal device, the method further comprises:
   sending K sounding signals to the terminal device based on K sounding signal codewords, wherein one sounding signal codeword is used to send one sounding signal.

7. The method according to any one of claims 1 to 6, wherein the method further comprises:
   the first model is comprised in $M_1$ first-type models, $M_1$ is an integer greater than 1, each first-type model corresponds to a respective channel type, the first-type model is used to determine codeword information based on characteristic information of a channel, and a codeword corresponding to the codeword information is used for precoding.

8. The method according to any one of claims 1 to 7, wherein the first model is obtained through training based on a first training dataset, the first training dataset comprises one or more downlink channel samples, and the first training dataset corresponds to a first channel type.

9. The method according to any one of claims 1 to 8, wherein the method further comprises:
   sending information about a third model to the terminal device, wherein input of the third model is information about a sounding signal, and output of the third model is characteristic information of a channel.

10. The method according to claim 9, wherein the method further comprises:
    the third model is comprised in $M_1$ second-type models, $M_1$ is an integer greater than 1, the $M_1$ first-type models are in a one-to-one correspondence with the $M_1$ second-type models, input of the second-type model is information about a sounding signal, and output of the second-type model is characteristic information of a channel.

11. The method according to claim 9 or 10, wherein the third model is obtained through training based on the first training dataset, or the third model is obtained through training based on the first training dataset and assistance information of the terminal device, the first training dataset comprises the one or more downlink channel samples, and the first training dataset corresponds to the first channel type.

12. The method according to claim 8 or 11, wherein the method further comprises:

    the first training dataset is obtained based on a second model, and the second model is used to obtain training data corresponding to the first channel type; or
    the first training dataset is determined in at least one piece of channel estimation information from at least one terminal device based on location information of the at least one terminal device, and the first training dataset comprises a part or all of the at least one piece of channel estimation information; or
    the first training dataset is obtained by clustering at least one piece of channel estimation information from at least one terminal device, and the first training dataset comprises a part or all of the at least one piece of channel estimation information.

13. The method according to claim 11, wherein the assistance information of the terminal device comprises one or more of the following: location information of the terminal device, speed information of the terminal device, acceleration information of the terminal device, posture information of the terminal device, or movement direction information of the terminal device.

14. The method according to claim 11 or 13, wherein the assistance information of the terminal device is used to determine information about a path of the downlink channel, and the information about the path of the downlink channel is used to determine a direction and/or a coverage width corresponding to the first codeword information.

15. The method according to any one of claims 1 to 14, wherein the method further comprises:
    receiving capability information from the terminal device, wherein the capability information indicates one or more of the following: whether the terminal device supports a neural network model, a type of a neural network model supported by the terminal device, computing power information of the terminal device, storage capability information of the terminal device, the location information of the terminal device, antenna configuration information of the terminal device, or sensor configuration information of the terminal device.

16. The method according to claim 15, wherein

the computing power information of the terminal device indicates a complexity degree of a neural network that can be supported by the terminal device;
the storage capability information of the terminal device indicates a scale of a neural network that can be stored by the terminal device;
the location information of the terminal device indicates a type of a downlink channel corresponding to the terminal device;
the antenna configuration information of the terminal device is used to determine a neural network corresponding to the terminal device; and/or
the sensor configuration information of the terminal device is used to determine a neural network corresponding to the terminal device.

17. A communication method, comprising:

receiving K sounding signals from an access network device, wherein K is a positive integer;
obtaining first characteristic information based on information about the K sounding signals and a third model, wherein the first characteristic information is characteristic information of a downlink channel; and
sending the first characteristic information to the access network device.

18. The method according to claim 17, wherein the obtaining first characteristic information based on information about the K sounding signals and a third model comprises:

inputting the information about the K sounding signals into the third model, to obtain the first characteristic information; or
inputting the information about the K sounding signals and assistance information of a terminal device into the third model, to obtain the first characteristic information.

19. The method according to claim 18, wherein the assistance information of the terminal device comprises one or more of the following: location information of the terminal device, speed information of the terminal device, acceleration information of the terminal device, posture information of the terminal device, or movement direction information of the terminal device.

20. The method according to any one of claims 17 to 19, wherein after the sending the first characteristic information to the access network device, the method further comprises: cyclically performing the following steps when i is an integer from 1 to N:

receiving an $i^{th}$ sounding signal from the access network device;
obtaining an $i^{th}$ piece of characteristic information based on information about the $i^{th}$ sounding signal and a fourth model, wherein the $i^{th}$ piece of characteristic information is characteristic information of the downlink channel; and
sending the $i^{th}$ piece of characteristic information to the access network device.

21. The method according to claim 20, wherein the obtaining an $i^{th}$ piece of characteristic information based on information about the $i^{th}$ sounding signal and a fourth model comprises:

inputting the information about the $i^{th}$ sounding signal into the fourth model, to obtain the $i^{th}$ piece of characteristic information; or
inputting the information about the $i^{th}$ sounding signal and the assistance information of the terminal device into the fourth model, to obtain the $i^{th}$ piece of characteristic information.

22. The method according to any one of claims 17 to 21, wherein the method further comprises:
receiving information about the third model from the access network device.

23. The method according to any one of claims 17 to 22, wherein the method further comprises:
sending channel estimation information to the access network device, wherein the channel estimation information is used to train the third model.

24. The method according to any one of claims 17 to 23, wherein the method further comprises:
sending capability information of the terminal device to the access network device, wherein the capability information indicates one or more of the following: whether the terminal device supports a neural network model, a type of a neural network model supported by the terminal device, computing power information of the terminal device, or storage capability information of the terminal device.

25. A communication apparatus, configured to implement the method according to any one of claims 1 to 16.

26. A communication apparatus, configured to implement the method according to any one of claims 17 to 24.

27. A communication apparatus, comprising a processor and a memory, wherein the memory is coupled to the processor, and the processor is configured to perform the method according to any one of claims 1 to 16.

28. A communication apparatus, comprising a processor and a memory, wherein the memory is coupled to the processor, and the processor is configured to perform the method according to any one of claims 17 to 24.

29. A communication system, comprising the communication apparatus according to claim 25 or 27 and the communication apparatus according to claim 26 or 28.

30. A computer-readable storage medium, wherein the computer-readable storage medium is configured to store a computer program, and when the computer program runs on a computer, the computer is enabled to perform the method according to any one of claims 1 to 16, or the computer is enabled to perform the method according to any one of claims 17 to 24.

FIG. 1

Network device

Terminal device

FIG. 2A

FIG. 2B

FIG. 2C

First AI module

Training data
Model information

Base station

Second AI module

Inference data
Inference result

UE

Radio frequency module

CU-CP

CU-UP

DU

Another entity

FIG. 2D

Base station

Second AI module

Training data
Inference data
Inference result

UE

Radio frequency module

CU-CP

CU-UP

DU

Another entity

FIG. 2E

FIG. 3

Transmit a sounding signal

Channel → Second-type model → First-type model → Channel → Received signal strength

FIG. 4

Characteristic information of a channel → Codeword information

Five layers of convolutional networks

Two layers of fully connected layer networks

FIG. 5A

Information about a sounding signal → Characteristic information of a channel

Four layers of convolutional networks

Three layers of fully connected layer networks

FIG. 5B

EP 4 373 006 A1

FIG. 6A

FIG. 6B

41

FIG. 7A

CONT. FROM
FIG. 7A

CONT. FROM
FIG. 7A

S712: $i^{th}$ sounding signal

S713: Obtain an $i^{th}$ piece of
characteristic information based
on information about the $i^{th}$
sounding signal and the third
model

S714: $i^{th}$ piece of characteristic information

S715: Obtain an $(i+1)^{th}$ piece of
sounding signal codeword
information based on the $i^{th}$
piece of characteristic
information and the first model

S716: $(i+1)^{th}$ sounding signal

S717: Obtain an $(i+1)^{th}$ piece of
characteristic information based
on information about the $(i+1)^{th}$
sounding signal and the third
model

S718: $(i+1)^{th}$ piece of characteristic information

S719: Obtain an $(i+2)^{th}$ piece of
sounding signal codeword
information based on the $(i+1)^{th}$
piece of characteristic
information and the first model

S720: Obtain first codeword
information

S721: Precoded data

FIG. 7B

800

801

Processor

Instructions

803

802

Memory

Instructions

804

Transceiver

805

Antenna

806

FIG. 8

## INTERNATIONAL SEARCH REPORT

| International application No. |
| --- |
| **PCT/CN2022/111556** |

| A. | CLASSIFICATION OF SUBJECT MATTER |
| --- | --- |

H04B 7/0456(2017.01)i;  H04B 7/06(2006.01)i

According to International Patent Classification (IPC) or to both national classification and IPC

| B. | FIELDS SEARCHED |
| --- | --- |

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNTXT; WPABSC; ENTXTC; VEN; CNKI: 波束成型, 波束成形, 波束赋形, 波束赋型, 预编码, 码字, 信道特征, 神经网络, 训练, 模型, 无需, 不用, 无须, 不需, 固定码本, beam 1w forming, beamforming, code, PM, channel, characteristic, CNN, FNN, DNN, RNN, AI, model training, no, not, without, fixed codebook

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2020169311 A1 (TELEFONAKTIEBOLAGET LM ERICSSON (PUBL)) 28 May 2020 (2020-05-28)<br>      claims 1-24, and description, paragraphs [0007]-[0077] | 17, 22-24, 26, 28, 30 |
| A | CN 106953676 A (SONY CORP.) 14 July 2017 (2017-07-14)<br>      entire document | 1-30 |
| A | CN 113242069 A (SOUTHEAST UNIVERSITY) 10 August 2021 (2021-08-10)<br>      entire document | 1-30 |
| A | CN 111988156 A (HUAWEI TECHNOLOGY SERVICE CO., LTD.) 24 November 2020 (2020-11-24)<br>      entire document | 1-30 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 October 2022** | **28 October 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/111556**

| Patent document cited in search report | | | Publication date (day/month/year) | Patent family member(s) | | | Publication date (day/month/year) |
|---|---|---|---|---|---|---|---|
| US | 2020169311 | A1 | 28 May 2020 | EP | 3676966 | A1 | 08 July 2020 |
|  |  |  |  | WO | 2019045606 | A1 | 07 March 2019 |
| CN | 106953676 | A | 14 July 2017 | US | 2020091974 | A1 | 19 March 2020 |
|  |  |  |  | EP | 3402090 | A1 | 14 November 2018 |
|  |  |  |  | WO | 2017118337 | A1 | 13 July 2017 |
|  |  |  |  | EP | 3709532 | A1 | 16 September 2020 |
|  |  |  |  | BR | 112018010935 | A2 | 04 December 2018 |
|  |  |  |  | JP | 2019503094 | A | 31 January 2019 |
|  |  |  |  | CN | 108476056 | A | 31 August 2018 |
|  |  |  |  | US | 2018302131 | A1 | 18 October 2018 |
|  |  |  |  | AU | 2016384951 | A1 | 14 June 2018 |
|  |  |  |  | US | 2021242912 | A1 | 05 August 2021 |
| CN | 113242069 | A | 10 August 2021 | None | | | |
| CN | 111988156 | A | 24 November 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110918240X